# EUROPEAN PATENT APPLICATION

(11) **EP 4 265 573 A1**
(43) Date of publication of application: **25.10.2023**
(21) Application number: 22742250.8
(22) Date of filing: 21.01.2022
(51) Int. Cl.: C03C 10/14, C03B 23/023, C03C 10/12

(54) **3D GLASS-CERAMIC, PREPARATION METHOD THEREFOR AND APPLICATION THEREOF**

(30) Priority: 25.01.2021 CN 202110099301; 25.01.2021 CN 202110099277
(71) Applicant: Chongqing Aureavia Hi-tech Glass Co., Ltd, Chongqing 400714 (CN)
(72) Inventor: CHENG, Cheng, Chongqing 400010 (CN)
(74) Representative: karo IP
(86) International application number: PCT/CN2022/073213
(87) International publication number: WO 2022/156771

(57) **Abstract**

The present invention provides a 3D glass-ceramic, which is characterized in that the crystallinity of the 3D glass-ceramic is 14-100 wt%; the average particle size of the crystals of the 3D glass-ceramic is 10-100 nm; and the thickness of the glass-ceramic is 0.02-5 mm. The preparation method for the 3D glass-ceramic of the present invention has low processing difficulty and low processing costs. The 3D hot bending crystallization time is much shorter than the conventional crystallization time; time is reduced, and the energy for heat treatment is also reduced.

## Description

### Technical Field

The present disclosure relates to the field of glass preparation technology, and in particular to a 3D glass-ceramic, preparation method thereof and application thereof.

### Background

As a new generation of high strength glass, glass-ceramic has higher performance than traditional lithium aluminum silicate glass. Since the glass-ceramic has a large amount of nanoscale crystals inside, it has a more stable structure, and a cover plate product with a higher strength can be obtained after chemical strengthening.

The equipment and raw materials required to perform the 3D hot bending process of mobile phone covers include: 3D hot bending machine, 3D hot bending die (generally graphite die) and glass material, etc. The processing process of the cover glass of a 3D hot bending mobile phone is generally performed by the following steps that: the glass panel is first formed by floating, calendering, and overflowing, and then passed through a cutting, thinning step, followed by CNC, polishing, 3D hot bending, 3D polishing, and chemical strengthening. The 3D hot bending is performed using a hot bending machine, wherein the hot bending machine includes a preheating station, shaping station and cooling station, the preheating station includes a preheating mould and a glass sheet, and the function thereof is to promote homogenization of the temperature inside and outside the glass; and the cooling station rapidly cools the mould by cooling water so that the temperature of the glass gradually decreases from a shaping temperature to a depanning temperature. The 3D hot bending mould is a graphite mould, which is divided into an upper part and a lower part. After the glass sheet is put into the mould, the whole 3D hot bending process flow is completed through the preheating stations, shaping stations and cooling station. In order to ensure the output efficiency of 3D hot bending process, a time length of each station is required. In the specific operation, the processed and cleaned glass sheet is placed in a 3D mould, and then the mould is placed in a 3D hot bending machine to perform 3D hot bending according to a pre-set process.

The principle utilized for the 3D hot bending process is as follows. After being heated to a temperature near a softening point, the glass or glass-ceramic can change its shape under the action of an external force, and after changing the shape, the glass or glass-ceramic is subjected to rapid cooling so that the shape obtained after hot-pressing can be maintained. The preheating step in the 3D hot bending process flow can avoid the glass from being broken when heated at a high temperature during forming, wherein the forming temperature is above the softening point, the glass is rapidly softened, and at the same time,upper and lower surfaces of the mould are pressed by a pressing rod to bend and form the glass plate, and the shape of the glass plate is maintained by maintaining the pressure before cooling, and then the mould is rapidly cooled by cooling water. In addition, the 3D hot bending process is protected with nitrogen throughout to avoid mould oxidation.

After forming, cutting and thinning the glass panel, the defects such as edge cracks are reduced by CNC, and the upper and lower surfaces of the glass panel are polished. The 3D hot bending of glass panels performed with CNC and polishing reduces breakage of the glass panels during the hot bending process.

### Summary of the Invention

The existing 3D hot-bending glass-ceramic is formed by hot-bending a fully crystallized glass-ceramic, and the processing procedure flow thereof is glass plate forming, glass plate nucleation and crystallization, crystallized glass plate thinning, crystallized glass plate cutting, CNC and polishing, and when the glass-ceramic is fully crystallized, operations such as 3D hot bending, 3D polishing and chemical strengthening are performed. The existing fully crystallized glass-ceramics have higher mechanical strength and hardness, resulting in low machining yield and high production cost of the existing fully crystallized glass-ceramics before hot bending.

The softening and forming temperatures of the existing fully crystallized glass-ceramics are generally no less than 700°C, so that a forming temperature of the 3D hot bending must be above 700°C. During the hot bending process, the original crystal phase type, crystal size, refractive index, Lab (chromaticity) value, haze and transmittance of the fully crystallized glass-ceramics change greatly due to heating. In the display scene, the chromaticity and transmittance of the glass-ceramics will directly affect the display effects such as display resolution, color gamut and saturation. The refractive index, haze and transmittance, especially the transmittance of ultraviolet and near-ultraviolet, of glass-ceramics which are applied to the objective lens of camera, have an important influence on the optical system of photography and camera shooting, and when the transmittance of ultraviolet and near-ultraviolet is low, the imaging quality will be directly affected.

In addition, the existing 3D hot bending of fully crystallized glass-ceramics is only for the purpose of hot bending forming, and there is repeated crystallization, resulting in waste of energy and time. Therefore, the 3D hot bending of the existing fully crystallized glass-ceramic has a very high technical difficulty, and it is difficult to achieve the required yield for industrial production by using the 3D hot bending to process into a 3D form.

However, if 3D hot bending forming of the fully crystallized glass-ceramic is not used, but the nucleated glass is subjected to 3D hot bending, since the volume shrinkage caused by the crystal grown on an interface between a crystal nucleus and the glass is very obvious in an initial stage of the hot bending and crystallization of the nucleated glass, the more the proportion of the growing crystal is, the larger the volume change of the product is, and the size control is very difficult, so that the nucleated glass will have a relatively large volume change during the hot bending and crystallization, which affects the size accuracy of the 3D hot-bending glass-ceramic after forming. Therefore, the present disclosure has found that 3D hot-bending is carried out using a partially crystallized glass-ceramic, wherein the glass is subjected to hot-bending deformation while the glass continues to be crystallized to reach a target crystallinity by heating, the crystallization process during 3D hot bending is reduced, and the size accuracy of the 3D glass-ceramic after hot-bending is higher.

In addition, in the prior art, a short hot-pressing time is controlled during hot bending, because a long hot-pressing time causes a mould imprint to appear on the surface of the glass-ceramic article, resulting in a decrease in surface quality and affecting the yield. However, the method of the present disclosure uses the partially crystallized original glass sheet to perform a 3D hot-bending, the initial crystallinity of the partially crystallized original glass sheet is high, and it is not easy to generate a mould imprint. Furthermore, since the initial crystallinity of the partially crystallized original glass sheet is high, the size deformation per unit time is small in the hot-pressing process, so that a longer hot-pressing time can be accommodated and the deformation after 3D can be controlled more accurately, and a tolerance fluctuation of the profile degree is smaller and the dimension is more stable.

In order to solve the foregoing technical problem, the present disclosure aims to provide a 3D glass-ceramic characterized in that the 3D glass-ceramic has a crystallinity of 14-100wt%; crystals of the 3D glass-ceramic have an average particle size of 10-100nm.

Preferably, the 3D glass-ceramic has a crystallinity of 14-30wt%, or the 3D glass-ceramic has a crystallinity of 50-100wt%; or the 3D glass-ceramic has a crystallinity of 31-49wt%;
or the crystals of the 3D glass-ceramic have an average particle size of 15-30 nm;
or the 3D glass-ceramic has a thickness of 0.02-5mm, preferably the 3D glass-ceramic has a thickness of 0.35-1.2mm.

Preferably, the 3D glass-ceramic has an average transmittance of 88-93%, preferably 90-91.5% at a wavelength of light of 380-780nm;
or the 3D glass-ceramic has an average transmittance of 65-91.5%, preferably 79-91%, more
preferably 85-91% at a wavelength of light of 360-400 nm.

Preferably, the absolute value of b value (yellow-blue value) when the thickness of the 3D glass-ceramic is 0.7 mm is 0.1-3.5, preferably 0.3-1.5;
or the 3D glass-ceramic has a haze of 0.07-1.0%, preferably 0.07-0.5%.

Preferably, a crystalline phase of the 3D glass-ceramic is one or two or more of lithium silicate, lithium disilicate, β-quartz, β-quartz solid solution, petalite, β-spodumene, β-spodumene solid solution, nepheline, cordierite, mullite, apatite, zirconium dioxide, zinc spinel, magnesium aluminate spinel and rutile.

Preferably, the 3D glass-ceramic includes the following ratio of oxides in mol%:

| composition | mol% |
|---|---|
| SiO₂ | 55%∼74% |
| Al₂O₃ | 3%∼19% |
| B₂O₃ | 0%∼4% |
| MgO | 0%∼6% |
| Na₂O | 0%∼3% |
| Li₂O | 6%∼25% |
| K₂O | 0%∼1% |
| CaO | 0-2% |
| ZnO | 0-5% |
| rare earth oxide | 0-3% |

the rare earth oxide being selected from one or two or more of La₂O₃, Eu₂O₃, Pr₆O₁₁, Nd₂O₃, Er₂O₃ and Dy₂O₃.

Preferably, the 3D glass-ceramic includes SiO₂ and Al₂O₃ in a total amount of more than 60% in mol%; preferably 68-80%;
or Na₂O+Li₂O is present in a range of 7%-30%, preferably 10%-26%, in mol%.

Preferably, the 3D glass-ceramic includes a nucleating agent comprising one or two or more of P₂O₅, TiO₂, ZrO₂, Cr₂O₃, CaF₂, LiF, NaF, KF, Y₂O₃, Au, Ag and Cu in terms of oxides, fluorides or elements; preferred are one or two or more of P₂O₅, TiO₂ and ZrO₂.

Preferably, the 3D glass-ceramic includes a fining agent comprising one or two or more of NaCl, Na₂SO₄, SnO₂, As₂O₃, Sb₂O₃, NaNO₃, KNO₃, CeO₂ and (NH₄)₂SO₄; preferred are one or two or more of NaCl, SnO₂, NaNO₃ and CeO₂.

Preferably, the crystallized original glass sheet of the 3D glass-ceramic is a glass sheet having crystals with an average particle size of 5-50 nm after being subjected to nucleation and crystallization.

Preferably, the crystallized original glass sheet of the 3D glass-ceramic is a glass sheet having a crystallinity of 5-90wt% after being subjected to nucleation and crystallization.

Preferably, the 3D glass-ceramic has a drop height of >1.5m after chemical strengthening, and preferably a Vickers hardness at a load of 300N for 10s is greater than 650.

The present disclosure also provides a preparation method of the 3D glass-ceramic described above, wherein the preparation method includes the steps of:
step 1: mixing and melting raw materials for preparing the 3D glass-ceramic, and then cooling and performing an annealing processing to obtain a glass substrate;
step 2: subjecting the glass substrate obtained in step 1 to nucleation, a cleavage being performed as required before or after the nucleation;
step 3: performing crystallization on the nucleated glass substrate of the step 2;
step 4: cutting the crystallized glass substrate as required to obtain a crystallized glass raw material;
step 5: subjecting the crystallized glass raw material to 3D hot bending to obtain a 3D glass-ceramic sample,
the 3D hot-bending process in step 5 being accompanied with crystallization process.

Preferably, the method may further include the step of subjecting the 3D glass-ceramic sample to chemical strengthening to obtain a finished 3D glass-ceramic product.

Preferably, in the step 1, a melting temperature is 1350-1700°C; preferably, the melting temperature is 1400-1650°C; more preferably, a melt is cooled to 500-1000°C after melting.

Preferably, in the step 1, a melting time is 1-5 hours; preferably, in the step 3, the crystallization is performed after the temperature is maintained at 500-900°C for 5-300min; it is further preferred that the step 3 further includes one or two or more of trimming, CNC machining, rough grinding and/or polishing to obtain a crystallized glass raw material.

Preferably, the nucleating agent is added in step 1 in an amount of 1-9 mol%, more preferably an amount of 2-5 mol%, of a total amount of the nucleating agent and glass-ceramic oxide. Preferably, the fining agent is added in step 1 in an amount of 0-4wt%, preferably 0.1-2wt% of a total mass of the nucleating agent and the glass-ceramic oxide.

Preferably, in the step 2, the nucleation is performed at a temperature of 450-800°C, and the nucleation is performed for a time of 30-360min; further preferably, the nucleation is performed at a temperature of 520-570°C, and the nucleation is performed for a time of 120-300min. Preferably, in the step 3, the crystallization is performed at a temperature of 550-900°C, and the crystallization is performed for a time of 5-300min.

Preferably, the crystallization is performed at a temperature of 600-850°C, and the crystallization is performed for a time of 10-240min.

Further preferably, the crystallization is performed at a temperature of 600-750°C, and the crystallization is performed for a time of 10-150 min.

Preferably, the hot bending of step 5 includes a preheating station, a hot pressing station, and a cooling station.

Preferably, a number of the preheating stations is 1-30, preferably 2-4; a number of the hot pressing stations is 1-30, preferably 1-3; the cooling station(s) include(s) 1-30, preferably 2-4 stations.

Preferably, a temperature of the preheating station is 300-850°C; a temperature of the hot pressing station is 600-920°C, and a pressure thereof is 0-6 MPa; a temperature of the cooling station is 200-650°C.

Preferably, a working time of the preheating station is 20-800 seconds; a working time of the hot pressing station is 20-800 seconds, and a working time of the cooling station is 20-800 seconds; Preferably, a working time of the preheating station is 60-600 seconds; a working time of the hot pressing station is 60-480 seconds, and a working time of the cooling station is 60-600 seconds. The present disclosure also provides a 3D glass-ceramic prepared by the preparation method. Preferably, the 3D glass-ceramic is characterized in that the 3D glass-ceramic is transparent or opaque; preferably, the 3D glass-ceramic is curved or planar.

The present disclosure also provides application of the 3D glass-ceramic or the 3D glass-ceramic of claim 24 or 25 in a mobile phone display screen, a tablet computer display screen, a palm game, an electronic terminal, a portable digital device, a vehicle-mounted central control screen, an electronic whiteboard glass, a smart home touch screen, a vehicle windshield glass, an aerocraft windshield glass or an aircraft windshield glass.

Advantageous effects of the present disclosure:
1. In the present disclosure, 3D hot-bending is carried out using a partially crystallized glass-ceramic, wherein the glass is subjected to hot-bending deformation while the glass continues to be crystallized to reach a target crystallinity by heating, the crystallization process during 3D hot bending is reduced, and the size accuracy of the 3D glass-ceramic after hot-bending is higher. The preparation method of the 3D glass-ceramic of the present disclosure is less difficult to process, has low processing cost, saves time cost, and saves energy for heat treatment. The use of partially crystallized glass-ceramic for 3D hot bending avoids the problem of repeated crystallization during 3D hot bending of existing highly crystallized or fully crystallized glass-ceramic.
2. Flat grinding and polishing during 3D glass-ceramic preparation is performed as needed prior to 3D hot bending. Flat grinding and polishing rates of 3D glass-ceramics are related to hardness, and the greater the hardness, the greater the difficulty of flat grinding and polishing, and the longer the time required. The present disclosure uses partially crystallized glass-ceramic for flat grinding and polishing, and the hardness is lower than that of fully crystallized glass-ceramic, and the flat grinding and polishing process of the glass sheet is less difficult and requires less time.
3. The optical properties of the 3D glass-ceramic of the present disclosure are improved, and since the softening and forming temperature of the existing fully crystallized glass-ceramic is generally no less than 700°C, the crystals in the glass-ceramic will continue to grow during the hot bending process above 700°C, and the remaining glass body will devitrify again, there is a problem of excessive devitrification, resulting in a significant decrease in the optical properties of the glass-ceramic after hot bending. The optical properties of the 3D glass-ceramic of the present disclosure are that the 3D glass-ceramic has an average transmittance of 88-93% at a wavelength of light of 380-780nm, and an average transmittance of 65-91.5% at a wavelength of light of 360-400nm, and an absolute value of b value (yellow and blue value) is 0.1-3.5 when the thickness of the 3D glass-ceramic is 0.7 mm.
4. The control rate of dimensional accuracy of the 3D glass-ceramic of the present disclosure is improved. The partially crystallized glass-ceramic is used for 3D hot bending, and the glass continues to be crystallized to reach the target crystallinity by heating. Although deformation occurs while the glass is crystallized in the process of hot bending, the deformation becomes smaller due to reducing the crystallization process during 3D hot bending, which is beneficial to control the dimensional accuracy of 3D glass-ceramic after hot bending.
5. The yield of the 3D glass-ceramic of the present disclosure is improved. If nucleated glass or glass with low initial crystallinity is used as the raw material for 3D hot bending, the raw material needs a large amount of devitrification in a short time of hot bending, and the raw material between different batches is affected by too many variables in the 3D hot bending process, which may result in poor crystal size, crystal type and crystal ratio stability between different batches. In the partially crystallized glass-ceramic used for 3D hot bending, the crystallinity is relatively high, the amount of crystal growth in the process of hot bending is less, reducing the influence of variable factors, so it is easier to control the stability of different batches of 3D glass-ceramics and improve the yield.

### Brief Description of the Drawings

Fig. 1 is an XRD plot of a glass brick obtained in step 2 of Example 25 after annealing and before nucleation;
Fig. 2 is an XRD plot of a partially crystallized original glass sheet obtained in step 4 of Example 25;
Fig. 3 is an XRD plot of a partially crystallized original glass sheet obtained in step 4 of Example 26;
Fig. 4 is an XRD plot of a partially crystallized original glass sheet obtained in step 4 of Example 30.

### Detailed Description of the Invention

The present disclosure provides a 3D glass-ceramic characterized in that the 3D glass-ceramic has a crystallinity of 14-100wt%; crystals of the 3D glass-ceramic have an average particle size of 10-100nm.

Preferably, the 3D glass-ceramic has a crystallinity of 14-30wt%, or the 3D glass-ceramic has a crystallinity of 50-100wt%; or the 3D glass-ceramic has a crystallinity of 31-49wt%;or the 3D glass-ceramic has a crystallinity of 10-20wt%; 21-30wt%; 31-40wt%; 41-50wt%; 51-60wt%; 61-70wt%; 71-80wt%; 81-90wt%; 91-100wt%.

Alternatively, the crystals of the 3D glass-ceramic have an average particle size of 15-30 nm;
or the 3D glass-ceramic has a thickness of 0.02-5mm, preferably the 3D glass-ceramic has a thickness of 0.35-1.2mm.

Preferably, the 3D glass-ceramic has an average transmittance of 88-93%, preferably 90-91.5% at a wavelength of light of 380-780nm;
or the 3D glass-ceramic has an average transmittance of 65-91.5%, preferably 79-91%, more preferably 85-91% at a wavelength of light of 360-400 nm.

Preferably, the absolute value of b value (yellow-blue value) when the thickness of the 3D glass-ceramic is 0.7 mm is 0.1-3.5, preferably 0.3-1.5;
or the 3D glass-ceramic has a haze of 0.07-1.0%, preferably 0.07-0.5%.

Preferably, a crystalline phase of the 3D glass-ceramic is one or two or more of lithium silicate, lithium disilicate, β-quartz, β-quartz solid solution, petalite, β-spodumene, β-spodumene solid solution, nepheline, cordierite, mullite, apatite, zirconium dioxide, zinc spinel, magnesium aluminate spinel and rutile.

Preferably, the 3D glass-ceramic includes the following ratio of oxides in mol%:

| composition | mol% |
|---|---|
| SiO₂ | 55%∼74% |
| Al₂O₃ | 3%∼19% |
| B₂O₃ | 0%∼4% |
| MgO | 0%∼6% |
| Na₂O | 0%∼3% |
| Li₂O | 6%∼25% |
| K₂O | 0∼1% |
| CaO | 0-2% |
| ZnO | 0-5% |
| Rare earth oxide | 0-3% |

the rare earth oxide being selected from one or two or more of La₂O₃, Eu₂O₃, Pr₆O₁₁, Nd₂O₃, Er₂O₃ and Dy₂O₃.

Preferably, the 3D glass-ceramic includes SiO₂ and Al₂O₃ in a total amount of more than 60% in mol%; preferably 68-80%;
or Na₂O+Li₂O is present in a range of 7%-30%, preferably 10%-26%, in mol%.

Preferably, the 3D glass-ceramic includes a nucleating agent comprising one or two or more of P₂O₅, TiO₂, ZrO₂, Cr₂O₃, CaF₂, LiF, NaF, KF, Y₂O₃, Au, Ag and Cu in terms of oxides, fluorides or elements; preferred are one or two or more of P₂O₅, TiO₂ and ZrO₂.

Preferably, the 3D glass-ceramic includes a fining agent comprising one or two or more of NaCl, Na₂SO₄, SnO₂, As₂O₃, Sb₂O₃, NaNO₃, KNO₃, CeO₂ and (NH₄)₂SO₄; preferred are one or two or more of NaCl, SnO₂, NaNO₃ and CeO₂.

Preferably, the crystallized original glass sheet of the 3D glass-ceramic is a glass sheet having crystals with an average particle size of 5-50 nm after being subjected to nucleation and crystallization.

Preferably, the crystallized original glass sheet of the 3D glass-ceramic is a glass sheet having a crystallinity of 5-90wt% after the nucleation and crystallization, and preferably the crystallinity is 5-10wt%, 11-15wt%, 16-20wt%, 21-25wt%, 26-30wt%, 31-35wt%, 36-40wt%, 41-45wt%, 46-50wt%, 51-55wt%, 56-60wt%, 61-65wt%, 66-70wt%, 71-75wt%, 76-80wt%, 81-85wt%, 86-90wt%, 91-95wt%, 96-100wt%, 15-29wt%, 30-75wt%, 76-90wt%, and/or 30-55wt%. Preferably, the 3D glass-ceramic has a drop height of >1.5m after chemical strengthening, and preferably a Vickers hardness at a load of 300N for 10s is greater than 650.

When the thickness of the 3D glass-ceramic is 0.65mm, after being chemically strengthened, a drop height of the whole machine with a load of 160g dropped on a base plate with a medium made of marble is> 1.5m, preferably, the Vickers hardness under a force load of 300N for 10s is greater than 650.

The present disclosure also provides a preparation method of the 3D glass-ceramic described above, wherein the preparation method includes the steps of:
step 1: mixing and melting raw materials for preparing the 3D glass-ceramic, and then cooling and performing an annealing processing to obtain a glass substrate;
step 2: subjecting the glass substrate obtained in step 1 to nucleation, a cleavage being performed as required before or after the nucleation;
step 3: performing crystallization on the nucleated glass substrate of the step 2;
step 4: cutting the crystallized glass substrate as required to obtain a crystallized glass raw material;
step 5: subjecting the crystallized glass raw material to 3D hot bending to obtain a 3D glass-ceramic sample,
the 3D hot-bending process in step 5 being accompanied with crystallization process.

In steps 4 and 5, the crystallized glass raw material can be a partially crystallized glass raw material.

Preferably, the method may further include the step of subjecting the 3D glass-ceramic sample to chemical strengthening to obtain a finished 3D glass-ceramic product.

Preferably, in the step 1, a melting temperature is 1350-1700°C; preferably, the melting temperature is 1400-1650°C; more preferably, a melt is cooled to 500-1000°C after melting.

Preferably, in the step 1, a melting time is 1 to 5 hours; preferably, in the step 3, the crystallization is performed after the temperature is maintained at 500-900°C for 5-300min; it is further preferred that the step 3 further includes one or two or more of trimming, CNC machining, rough grinding and/or polishing to obtain a crystallized glass raw material.

Preferably, the nucleating agent is added in step 1 in an amount of 1-9 mol%, more preferably an amount of 2-5 mol%, of a total amount of the nucleating agent and glass-ceramic oxide. Preferably, the fining agent is added in step 1 in an amount of 0-4wt%, preferably 0.1-2wt% of a total mass of the nucleating agent and the glass-ceramic oxide.

Preferably, in the step 2, the nucleation is performed at a temperature of 450-800°C, and the nucleation is performed for a time of 30-360min; further preferably, the nucleation is performed at a temperature of 520-570°C, and the nucleation is performed for a time of 120-300min. Preferably, in the step 3, the crystallization is performed at a temperature of 550-900°C, and the crystallization is performed for a time of 5-300min.

Preferably, the crystallization is performed at a temperature of 600-850°C, and the crystallization is performed for a time of 10-240min.

Further preferably, the crystallization is performed at a temperature of 600-750°C, and the crystallization is performed for a time of 10-150 min.

Preferably, the hot bending of step 5 includes a preheating station, a hot pressing station, and a cooling station.

Preferably, a number of the preheating stations is 1-30, preferably 1, 2, 3, 4, 5, 6, 7, 8, 9, 10, 11, 1, 2, 13, 14, 15, 16, 17, 18, 19, 20, 21, 22, 23, 24, 25, 26, 27, 28, 29, 30; preferably 2-4; a number of the hot pressing stations is 1-30, preferably 1, 2, 3, 4, 5, 6, 7, 8, 9, 10, 11, 1, 2, 13, 14, 15, 16, 17, 18, 19, 20, 21, 22, 23, 24, 25, 26, 27, 28, 29, 30; preferably 1-3; the cooling station(s) include(s) 1-30, preferably 1, 2, 3, 4, 5, 6, 7, 8, 9, 10, 11, 1, 2, 13, 14, 15, 16, 17, 18, 19, 20, 21, 22, 23, 24, 25, 26, 27, 28, 29, 30; preferably there are 2-4.

Preferably, a temperature of the preheating station is 300-850°C; a temperature of the hot pressing station is 600-920°C, and a pressure thereof is 0-6 MPa; a temperature of the cooling station is 200-650°C.

Preferably, a working time of the preheating station is 20-800 seconds; a working time of the hot pressing station is 20-800 seconds, and a working time of the cooling station is 20-800 seconds; Preferably, a working time of the preheating station is 60-600 seconds; a working time of the hot pressing station is 60-480 seconds, and a working time of the cooling station is 60-600 seconds. The present disclosure also provides a 3D glass-ceramic prepared by the preparation method. Preferably, the 3D glass-ceramic is characterized in that the 3D glass-ceramic is transparent or opaque; preferably, the 3D glass-ceramic is curved or planar.

The present disclosure also provides application of the 3D glass-ceramic or the 3D glass-ceramic of claim 24 or 25 in a mobile phone display screen, a tablet computer display screen, a palm game, an electronic terminal, a portable digital device, a vehicle-mounted central control screen, an electronic whiteboard glass, a smart home touch screen, a vehicle windshield glass, an aircraft windshield glass or an aircraft windshield glass.

Nominal explanation:
3D glass-ceramic: glass-ceramics in which upper and lower faces are non-planar;
2D glass-ceramic: glass-ceramics in which upper and lower faces are planar;
2.5 D Glass-ceramic: glass-ceramics with one face being a plane and one face being a non-plane; Crystallinity: the glass-ceramic contains a crystalline phase and a glassy phase, and the percentage of the mass of the crystalline phase to the total mass of the glass-ceramic is the crystallinity; Permeability: a ratio of radiant energy projected and transmitted through the object to total radiant energy projected onto the object in the process of the incident light flux leaving from an illuminated surface or a medium incident surface to the other surface;
Average transmittance: the transmission at each wavelength is measured at intervals of 10nm in a specified wavelength range, and a sum of the measured transmission at each wavelength is divided by the number of the measured transmission at each wavelength. For example, the average transmittance at 360-400nm is calculated as follows: the transmittance is respectively measured at 360nm, 370nm, 380nm, 390nm and 400nm, the number of measured transmittance at 360-400nm is 5, and the sum of the foregoing transmittance is divided by 5 to obtain the average transmittance at 360-400nm;
Nucleation: the nucleated substance in the glass is grown into a crystal nucleus of about 5nm by heat treatment;
Crystallization: the glass grows a certain crystal on the basis of the crystal nucleus by heat treatment;
Average particle size of crystals: based on an average of grain lengths observed in the glass-ceramic at a magnification of 100,000-1,000,000 times. Transmission electron microscopy (model: ThermoFisher Scientific (formerly FEI) Talos F 200S) is utilized to perform observation and measurement. When measuring, it is equivalent to taking a magnified photograph of the grains at a certain position; there are limited grains in the magnified photograph area, marking the size of the limited grains according to the scale, and then averaging. The magnification in the embodiments of the disclosure is 500,000 times when measured.

b Value: b Value indicates the yellow-blue value of the material, and in the present disclosure, b value is the b value of the transmitted light, and a positive b value indicates that the material is bluish; measurement is performed using a chromatograph (model CM-3600A).

Haze: a percentage that an intensity of the transmitted light which deviates from the incident light by no less than 2.5° accounts for in the total transmitted light intensity. Measurement is performed using a chromatograph (model CM-3600A).

When the thickness of the 3D glass-ceramic is 0.65mm, the optical performance thereof is that the absolute value of the b value under D65 light source is 0.1-3.5, and preferably the absolute value of the b value under the D65 light source is 0.3-1.5; the light transmittance at a wavelength of 360nm is 80% or more, and preferably the transmittance at a wavelength of 360nm is 85% or more.

Nucleating agents include, but are not limited to, P₂O₅, TiO₂, ZrO₂, Cr₂O₃, CaF₂, LiF, NaF, KF, Y₂O₃, Au, Ag, and Cu and the like.

When the partially crystallized glass-ceramic is crystallized by hot bending, the crystallization speed is controllable, which is beneficial to the growth of crystals with a particle size no more than 100nm, and the average particle size of the precipitated crystals can be ensured to be 10-100nm by controlling the process, thereby improving the optical performance of the 3D glass-ceramic;

In other specific embodiments, for the partially crystallized glass-ceramic, the a 3D hot bending process, the crystallization and 3D hot bending forming are performed simultaneously, and the hot bending time is generally within 30min. Some examples show that the partially crystallized glass-ceramic can reach a crystallinity of 80wt% or more through 3D hot bending for 10-20min under a suitable process, and the optical properties meet the requirements.

A crystalline phase of the 3D glass-ceramic includes lithium silicate, lithium disilicate, β-quartz, β-quartz solid solution, petalite, β-spodumene, β-spodumene solid solution, nepheline, cordierite, mullite, apatite, zirconium dioxide, zinc spinel, magnesium aluminate spinel and rutile etc.

In order that the disclosure may be better understood, further details of the invention are set forth in the following examples.

The manufacturers of the raw materials and equipment used in the embodiment, as well as the equipment and analytical methods used for product analysis, are described as follows, wherein the chemical substances are of chemical purity grades of conventional reagents if not otherwise indicated.

The information of raw materials used in the embodiments and comparative examples is shown in Table 1.

**Table 1 Information on raw materials and instruments used in the present disclosure**

| Composition/nucleating agent (calculated as oxide, fluoride or elemental)/fining agent/instrument name | Raw materials | Purity/ wt% | Manufacturer |
|---|---|---|---|
| SiO₂ | Silica sand | 99.5 | Shanghai Sinopharm Chemical Reagent Co., Ltd. |
| Al₂O₃ | Alumina | 99.5 | Shanghai Sinopharm Chemical Reagent Co., Ltd. |
| B₂O₃ | Boric acid | 99.8 | Shanghai Sinopharm Chemical Reagent Co., Ltd. |
| | Borax | 99.5 | Shanghai Sinopharm Chemical Reagent Co., Ltd. |
| P₂O₅ | Ammonium phosphate | 99.5 | Shanghai Sinopharm Chemical Reagent Co., Ltd. |
| | Aluminium phosphate | 99.5 | Shanghai Sinopharm Chemical Reagent Co., Ltd. |
| MgO | Magnesium carbonate | 99.8 | Shanghai Sinopharm Chemical Reagent Co., Ltd. |
| Na₂O | Sodium carbonate | 99.8 | Shanghai Sinopharm Chemical Reagent Co., Ltd |
| Li₂O | Lithium carbonate | 98 | Shanghai Sinopharm Chemical Reagent Co., Ltd. |
| K₂O | Potassium carbonate | 99.5 | Shanghai Sinopharm Chemical Reagent Co., Ltd. |
| SnO₂ | SnO₂ | 99.5 | Shanghai Sinopharm Chemical Reagent Co., Ltd. |
| CaO | Calcium carbonate | 99.0 | Shanghai Sinopharm Chemical Reagent Co., Ltd. |
| ZnO | Zinc oxide | 99.0 | Shanghai Sinopharm Chemical Reagent Co., Ltd. |
| TiO₂ | Titanium dioxide | 99.0 | Shanghai Aladdin Biochemical Technology Co.,Ltd. |
| ZrO₂ | Zircon sand | 99.0 | Shanghai Aladdin Biochemical Technology Co.,Ltd. |
| | Zirconium dioxide | 99.5 | Shanghai Sinopharm Chemical Reagent Co., Ltd |
| CaF₂ | Calcium fluoride | 99.5 | Shanghai Aladdin Biochemical Technology Co.,Ltd. |
| NaF | Sodium fluoride | 99.5 | Shanghai Aladdin Biochemical Technology Co.,Ltd. |
| La₂O3 | La₂O₃ | 99.5 | Shanghai Sinopharm Chemical Reagent Co., Ltd. |
| Eu₂O₃ | Eu₂O₃ | 99.5 | Shanghai Sinopharm Chemical Reagent Co., Ltd. |
| Pr₆O₁₁ | Pr₆O₁₁ | 99.5 | Shanghai Sinopharm Chemical Reagent Co., Ltd. |
| Nd₂O₃ | Nd₂O₃ | 99.5 | Shanghai Sinopharm Chemical Reagent Co., Ltd. |
| Er₂O₃ | Er₂O₃ | 99.5 | Shanghai Sinopharm Chemical Reagent Co., Ltd. |
| Dy₂O₃ | Dy₂O₃ | 99.5 | Shanghai Sinopharm Chemical Reagent Co., Ltd. |
| Y₂O₃ | Y₂O₃ | 99.5 | Shanghai Sinopharm Chemical Reagent Co., Ltd. |
| NaCl | NaCl | 99.8 | Shanghai Sinopharm Chemical Reagent Co., Ltd. |
| SnO₂ | SnO₂ | 99.5 | Shanghai Sinopharm Chemical Reagent Co., Ltd. |
| As₂O₃ | As₂O₃ | 99.5 | Shanghai Sinopharm Chemical Reagent Co., Ltd. |
| Sb₂O₃ | Sb₂O₃ | 99.5 | Shanghai Sinopharm Chemical Reagent Co., Ltd. |
| NaNO₃ | NaNO₃ | 99.5 | Shanghai Sinopharm Chemical Reagent Co., Ltd. |
| KNO₃ | KNO₃ | 99.5 | Shanghai Sinopharm Chemical Reagent Co., Ltd. |
| CeO₂ | CeO₂ | 99.5 | Shanghai Sinopharm Chemical Reagent Co., Ltd. |
| (NH₄)₂SO₄ | (NH₄)₂SO₄ | 99.5 | Shanghai Sinopharm Chemical Reagent Co., Ltd. |
| Chromatograph | CM-3600A | | KONICA MINOLTA |
| X-ray diffractometer (XRD) | XRD-6100 | | Shimadzu Corp. |
| Whole machine drop tester | Xiangmin/XM-960 | | Xiangmin Instrument Equipment Co. Ltd. (Shenzhen City) |
| Vickers hardness tester | HV-1000CCD | | Ningbo Qichen Instrument Co. Ltd. |
| Scattered light photoelastic stress meter | SLP2000 | | Tianye Instrument Co. Ltd. (Shenzhen City) |
| High-temperature lifting furnace | SJF1750 | Nanjing Boyuntong Instrument Co. Ltd. | |
| Annealing furnace | YYX1400-40 | Shanghai Shengli Instrument Equipment Co. Ltd. | |
| Precision annealing furnace | RQSQ-16-12 | Jiangsu Zhongya Ruiya Thermal Energy Co. Ltd. | |
| Polishing machine | YF-401A | Yifeng Machinery Co. Ltd. (Hebei Province) | |
| Multi-wire cutting machine | ch5625 | Taizhou Chenhong Numerical Control Equipment Manufacturing Co. Ltd. | |
| CNC machine | CN-650 | Shandong Chinuo Numerical Control Equipment Co. Ltd. | |
| Flat mill | YJ-13B6LD | Hunan Ningjing Machinery Co. Ltd. | |
| Polishing machine | YJ-13B6PD | Hunan Ningjing Machinery Co. Ltd. | |
| 3D heat bender | DTK-DGP-3D125 | DAEHO TECK | |

### Embodiments

The hot bending processes in the embodiments are shown in Table 2 below. For example, when the process serial number is 1, the hot bending process includes four preheating stations, three hot pressing stations, and two cooling stations. A temperature of the first preheating station is 430°C, a temperature of the second preheating station is 500°C, a temperature of the third preheating station is 600°C, and a temperature of the fourth preheating station is 680°C. A temperature of the first hot pressing station is 800°C, an upper pressure is 0.4MPa, and a lower pressure is 0.4MPa; a temperature of the second hot pressing station is 810°C, an upper pressure is 0.4 MPa, and a lower pressure is 0.4 MPa; a temperature of the third hot pressing station is 600°C, an upper pressure is 0.4 MPa and a lower pressure is 0.4 MPa. A temperature of the first cooling station is 450°C and a temperature of the second cooling station is 300°C. A working time of each of the preheating station, the hot pressing station and the cooling station is the same and is 20s.

For example, when the serial number is 12, the hot bending process is that the hot bending process includes four preheating stations, three hot pressing stations, and two cooling stations. A temperature of the first preheating station is 430°C, a temperature of the second preheating station is 500°C, a temperature of the third preheating station is 700°C, and a temperature of the fourth preheating station is 850°C. A temperature of the first hot pressing station is 780°C, an upper pressure is 0.1 MPa, and a lower pressure is 0.1 MPa; a temperature of the second hot pressing station is 760°C, an upper pressure is 0.1 MPa, and a lower pressure is 0.1 MPa; a temperature of the third hot pressing station is 600°C, an upper pressure is 0.1 MPa and a lower pressure is 0.1 MPa. A temperature of the first cooling station is 450°C and a temperature of the second cooling station is 300°C. A working time of each of the preheating station, the hot pressing station and the cooling station is the same and is 90s. This is listed here.

**Table 2 Hot bending process table in embodiments and comparative examples**

| Pr oc es se s Se ri at N u m be r | Vario us static ns Time | Preh eati ng stati on 1 Tern pera ture/ °C | Temp eratur e of prehea ting station 2/°C | Temp eratur e of prehe ating static n 3/°C | Tempera ture of preheati ng station 4/°C | Temp eratu re of prehe ating static n 5/°C | Temper ature of hot pressin g station 1/°C | Temper ature of hot pressin g station 2/°C | Temper ature of hot pressin g station 3/°C | Temper ature of hot pressin g station 4/°C | Temper ature of cooling station 1/°C | Temper ature of cooling station 2/°C | Pressures at hot pressing stations 1-3 /MPa |
|---|---|---|---|---|---|---|---|---|---|---|---|---|---|
| 1 | 20s | 430 | 500 | 600 | 680 | | 800 | 810 | 600 | | 450 | 300 | Upper pressure of 0.4 MPa on hot pressing stations 1, 2, 3, lower pressure of 0.4 MPa on hot pressing stations 1, 2, 3 |
| 2 | 20s | 520 | 660 | 680 | 720 | | 740 | 760 | 600 | | 450 | 300 | Upper pressure of 0.4 MPa, lower pressure of 0.3 MPa on hot pressing station 1 |
| 3 | 40s | 430 | 500 | 600 | 680 | | 850 | 850 | 700 | | 450 | 300 | Upper pressure of 0.3 MPa, lower pressure of 0.3 MPa on hot pressing station 1 |
| 4 | 40s | 430 | 500 | 600 | 680 | | 850 | 800 | 700 | | 450 | 300 | Upper pressure of 0.7 MPa, lower pressure of 0.3 MPa on hot pressing station 1 |
| 5 | 60s | 450 | 600 | 650 | 700 | | 720 | 730 | 600 | | 450 | 300 | Upper pressure of 0.3 MPa, lower pressure of 0.3 MPa on hot pressing station 1 |
| 6 | 60s | 450 | 600 | 650 | 710 | | 730 | 740 | 600 | | 450 | 300 | Upper pressure of 0.3 MPa, lower pressure of 0.3 MPa on hot pressing station 1 |
| 7 | 80s | 480 | 630 | 680 | 710 | | 740 | 760 | 600 | | 450 | 300 | Upper pressure of 0.8 MPa, lower pressure of 0.3 MPa on hot pressing station 1 |
| 8 | 80s | 480 | 635 | 685 | 715 | | 745 | 760 | 600 | | 450 | 300 | Upper pressure of 0.3 MPa, lower pressure of 0.6 MPa on hot pressing station 1 |
| 9 | 90s | 480 | 630 | 680 | 710 | | 750 | 780 | 600 | | 450 | 300 | Upper pressure of 0.5 MPa, lower pressure of 0.5 MPa on hot pressing station 1 |
| 10 | 90s | 480 | 630 | 680 | 710 | | 760 | 730 | 600 | | 450 | 300 | Upper pressure of 0.3 MPa, lower pressure of 0.3 MPa on hot pressing station 1 |
| 11 | 90s | 480 | 630 | 680 | 710 | | 740 | 760 | 600 | | 450 | 300 | Upper pressure of 0.6 MPa on hot pressing stations 2, 3, lower pressure of 0.5 MPa on hot pressing stations 2, 3 |
| 12 | 90s | 430 | 500 | 700 | 850 | | 780 | 760 | 600 | | 450 | 300 | Upper pressure of 0.1 MPa on hot pressing stations 1, 2, 3, lower pressure of 0.1 MPa on hot pressing stations 1, 2, 3 |
| 13 | 90s | 450 | 600 | 650 | 710 | | 720 | 720 | 600 | | 450 | 300 | Upper pressure of 0.3 MPa, lower pressure of 0.3 MPa on hot pressing station 1 |
| 14 | 90s | 450 | 600 | 650 | 720 | | 750 | 760 | 600 | | 450 | 300 | Upper pressure of 0.1 MPa on hot pressing stations 1, 2, lower pressure of 0.1 MPa on hot pressing stations 1, 2 |
| 15 | 90s | 450 | 600 | 650 | 740 | | 770 | 760 | 600 | | 450 | 300 | Upper pressure of 0.1 MPa on hot pressing stations 1, 2, lower pressure of 0.1 MPa on hot pressing stations 1, 2 |
| 16 | 90s | 480 | 600 | 650 | 720 | | 940 | 920 | 600 | | 450 | 300 | Upper pressure of 0.1 MPa on hot pressing stations 1, 2, |
| | | | | | | | | | | | | | lower pressure of 0.1 MPa on hot pressing stations 1, 2 |
| 17 | 90s | 450 | 600 | 650 | 720 | | 930 | 920 | 600 | | 450 | 300 | Upper pressure of 0.1 MPa on hot pressing stations 1, 2, lower pressure of 0.1 MPa on hot pressing stations 1, 2 |
| 18 | 90s | 450 | 500 | 650 | 650 | | 580 | 600 | 600 | | 450 | 300 | Upper pressure of 0.1 MPa on hot pressing stations 1, 2, lower pressure of 0.1 MPa on hot pressing stations 1, 2 |
| 19 | 90s | 500 | 550 | 600 | | | 600 | 580 | 550 | | 450 | 300 | Upper pressure of 0.1 MPa on hot pressing stations 1, 2, lower pressure of 0.1 MPa on hot pressing stations 1, 2 |
| 20 | 140s | 450 | 600 | 650 | | | 760 | 750 | 720 | 600 | 450 | 300 | Upper pressure of 0.1 MPa on hot pressing stations 1, 2, 3, lower pressure of 0.1 MPa on hot pressing stations 1, 2, 3 |
| 21 | 140s | 430 | 500 | 600 | 680 | 720 | 745 | 760 | 600 | | 450 | 300 | Upper pressure of 0.5 MPa, lower pressure of 0.5 MPa on hot pressing station 1 |

### Example 1 Preparation method of 3D glass-ceramic:

step 1: preparing and weighing the raw materials for the preparation of glass (in mole percent, containing the following components: SiO₂ of 62.00%; Al₂O₃ of 17.00%; MgO of 2.50%; Na₂O of 2.50%; Li₂O of 10.00%; B₂O₃ of 2.00%, rare earth oxide La₂O₃ of 0.8%, nucleating agent (containing 2.00% of P₂O₅; 1.20% of ZrO₂), and 0.8 wt% of a fining agent NaCl in the total mass of the nucleating agent and the raw materials for preparation, the total weight of the above-mentioned raw materials being 1713.6g), and after sufficient mixing, melting and forming in a high-temperature lifting furnace, a temperature of the melting and forming being 1650°C, and a melting time being 5h, pouring same into a mould made of ASTM SA213/TP310S austenitic chromium-nickel stainless steel to obtain a glass brick;
step 2: after cooling the glass brick obtained in step 1 to 800°C, transferring same to an annealing furnace for annealing (after the annealing process is maintaining at a temperature of 620°C for 5h, reducing the temperature to 30°C by 1°C/min), and then transferring same to a precision annealing furnace for nucleation, wherein a temperature of nucleation is 760°C, and a time of nucleation is 120 min;
step 3: continuing the crystallization of the nucleated glass brick in a precision annealing furnace, wherein a crystallization temperature is 790°C and a crystallization time is 10 min, so as to obtain a glass brick after partial crystallization;
step 4: after the partially crystallized glass brick has been edged by a polishing machine, using a multi-wire cutting machine to cut into pieces, using a CNC machine tool to machine a glass sheet with a long width and a thickness of 158*75*0.65 mm, and then using a flat mill and a polishing machine to perform rough grinding and polishing respectively to obtain a partially crystallized original glass sheet, wherein the crystallinity thereof is determined to be 10wt%.
step 5: subjecting the partially crystallized original glass sheet to 3D hot bending, the hot bending process including four preheating stations, three hot pressing stations, and two cooling stations. A temperature of the first preheating station is 430°C, a temperature of the second preheating station is 500°C, a temperature of the third preheating station is 600°C, and a temperature of the fourth preheating station is 680°C. A temperature of the first hot pressing station is 800°C, an upper pressure is 0.4MPa, and a lower pressure is 0.4MPa; a temperature of the second hot pressing station is 810°C, an upper pressure is 0.4 MPa, and a lower pressure is 0.4 MPa; a temperature of the third hot pressing station is 600°C, an upper pressure is 0.4 MPa and a lower pressure is 0.4 MPa. A temperature of the first cooling station is 450°C and a temperature of the second cooling station is 300°C. A working time of each of the preheating station, the hot pressing station and the cooling station is the same and is 20s. (i.e. using the hot bending process with the serial number 1 in table 2) obtaining a 3D glass-ceramic sample 1.

The above-mentioned 3D glass-ceramic sample 1 is detected, and the X-ray diffraction data after detection is analyzed using a ray diffractometer with the diffractometer set at a voltage of 40 mV and a current of 30 mA, a test range of 10-50 °, a scanning speed of 1 °/min, and a step size of 0.02 °/step, wherein the crystallinity of the 3D glass-ceramic sample 1 is 15wt%, the precipitated crystal phase is β-spodumene, and the average particle size of the crystal is 37 nm. When a light source is defined as D65, the absolute value of the b value of the 3D glass-ceramic sample 1 is 2.30; the transmittance of light at a wavelength of 360nm is 76.30%, the average transmittance of light at a wavelength of 380-780nm is 88.20%, the average transmittance of light at a wavelength of 360-400nm is 80.10%, and the haze is 0.40%.

step 6: subjecting the hot-bent 3D glass-ceramic obtained in step 5 to chemical strengthening, and immersing the glass in a molten of 100wt% NaNO₃ solution at a temperature of 430°C for 8 hours to finally obtain a finished 3D glass-ceramic product 1.

### Example 2 Preparation method of 3D glass-ceramic:

step 1: preparing and weighing the raw materials for the preparation of glass (in mole percent, containing the following components: SiO₂ of 64.00%; Al₂O₃ of 17.00%; Na₂O of 2.50%; Li₂O of 12.5%; B₂O₃ of 2.00%, nucleating agent (containing 0.80% of P₂O₅; 1.20% of ZrO₂), and 0.8 wt% of a fining agent NaCl in the total mass of the nucleating agent and the raw materials for preparation, the total weight of the above-mentioned raw materials being 1713.6g, and after sufficient mixing, melting and forming in a high-temperature lifting furnace, a temperature of the melting and forming being 1650°C, and a melting time being 5h, pouring same into a mould made of ASTM SA213/TP310S austenitic chromium-nickel stainless steel to obtain a glass brick;
step 2 and step 3 which are the same as those in Example 1;
step 4 the process of trimming, cutting into pieces, rough grinding and polishing being the same as that in Example 1, wherein the crystallinity is determined to be 13wt%;
step 5: subjecting the partially crystallized original glass sheet to 3D hot bending, and obtaining a 3D glass-ceramic sample 2 by using a hot bending process with the serial number 1 in table 2 (reference can be made to Example 1).

The above-mentioned 3D glass-ceramic sample 2 is tested, and the X-ray diffraction data after the test is analyzed using a ray diffractometer under the same instrument setting conditions as in example 1, wherein the crystallinity of the 3D glass-ceramic sample 2 after hot bending is 24wt%, the precipitated crystal phase is β-spodumene, and the average particle size of the crystal is 27nm. When a light source is defined as D65, the absolute value of the b value of the 3D glass-ceramic sample 2 is 3.10; the transmittance of light at a wavelength of 360nm is 76.00%, the average transmittance of light at a wavelength of 380-780nm is 88.00%, the average transmittance of light at a wavelength of 360-400nm is 78.00%, and the haze is 0.43%.

step 6: subjecting the hot-bent 3D glass-ceramic obtained in step 5 to chemical strengthening under the same conditions as in Example 1, and finally obtaining a finished 3D glass-ceramic product 2.

### Example 3 Preparation method of 3D glass-ceramic:

step 1: preparing and weighing the raw materials for the preparation of glass (in mole percent, containing the following components: SiO₂ of 63.64%; Al₂O₃ of 16.03%; Li₂O of 16.03%; B₂O₃ of 2.00%, nucleating agent (containing 0.80% of P₂O₅; 1.50% of ZrO₂), and 0.8 wt% of a fining agent NaCl in the total mass of the nucleating agent and the raw materials for preparation, the total weight of the above-mentioned raw materials being 1713.6g, and after sufficient mixing, melting and forming in a high-temperature lifting furnace, a temperature of the melting and forming being 1630°C, and a melting time being 5h, pouring same into a mould made of ASTM SA213/TP310S austenitic chromium-nickel stainless steel to obtain a glass brick;
step 2: after cooling the glass brick obtained in step 1 to 800°C, transferring same to an annealing furnace for annealing (after the annealing process is maintaining at a temperature of 610°C for 5h, reducing the temperature to 30°C by 1°C/min), and then transferring same to a precision annealing furnace for nucleation, wherein a temperature of nucleation is 705°C, and a time of nucleation is 120 min;
step 3: continuing the crystallization of the nucleated glass brick in a precision annealing furnace, wherein a crystallization temperature is 775°C and a crystallization time is 10 min, so as to obtain a glass brick after partial crystallization;
step 4 the process of trimming, cutting into pieces, rough grinding and polishing being the same as that in Example 1, wherein the crystallinity is determined to be 9wt%;
step 5: subjecting the partially crystallized original glass sheet to 3D hot bending; and obtaining a 3D glass-ceramic sample 3 by using a hot bending process with the serial number 1 in table 2 (reference can be made to Example 1).

The above-mentioned 3D glass-ceramic sample 3 is tested, and the X-ray diffraction data after the test is analyzed using a ray diffractometer under the same instrument setting conditions as in example 1, wherein the crystallinity of the 3D glass-ceramic sample 3 after hot bending is 18wt%, the precipitated crystal phase is β-quartz solid solution, and the average particle size of the crystal is 24 nm. When a light source is defined as D65, the absolute value of the b value of the 3D glass-ceramic sample 3 is 1.21; the transmittance of light at a wavelength of 360nm is 83.71%, the average transmittance of light at a wavelength of 380-780nm is 90.22%, the average transmittance of light at a wavelength of 360-400nm is 84.56%, and the haze is 0.16%.

### Example 4 Preparation method of 3D glass-ceramic:

step 1: preparing and weighing the raw materials for the preparation of glass (in mole percent, containing the following components: SiO₂ of 66.63%; Al₂O₃ of 15.13%; MgO of 4.76%; Na₂O of 1.55%; Li₂O of 8.65%; rare earth oxide La₂O₃ of 0.81%; nucleating agent (containing 0.67% of P₂O₅; 1.30% of ZrO₂, Y₂O₃ of 0.50%), and 0.8 wt% of NaCl in the total mass of the nucleating agent and the raw materials for preparation, the total weight of the above-mentioned raw materials being 1713.6g, and after sufficient mixing, melting and forming in a high-temperature lifting furnace, a temperature of the melting and forming being 1630°C, and a melting time being 5h, pouring same into a mould made of ASTM SA213/TP310S austenitic chromium-nickel stainless steel to obtain a glass brick;
step 2: after cooling the glass brick obtained in step 1 to 800°C, transferring same to an annealing furnace for annealing (after the annealing process is maintaining at a temperature of 610°C for 5h, reducing the temperature to 30°C by 1°C/min), and then transferring same to a precision annealing furnace for nucleation; a temperature of nucleation is 720°C, and a time of nucleation is 120 min;
step 3: continuing the crystallization of the nucleated glass brick in a precision annealing furnace, wherein a crystallization temperature is 780°C and a crystallization time is 10 min, so as to obtain a glass brick after partial crystallization;
step 4 the process of trimming, cutting into pieces, rough grinding and polishing being the same as that in Example 1, wherein the crystallinity is determined to be 11 wt%;
step 5: subjecting the partially crystallized original glass sheet to 3D hot bending; and obtaining a 3D glass-ceramic sample 4 by using a hot bending process with the serial number 1 in table 2 (reference can be made to Example 1).

The above-mentioned 3D glass-ceramic sample 4 is tested, and the X-ray diffraction data after the test is analyzed using a ray diffractometer under the same instrument setting conditions as in example 1, wherein the crystallinity of the 3D glass-ceramic sample 4 after hot bending is 23wt%, the precipitated crystal phase is β-quartz solid solution, and the average particle size of the crystal is 27 nm. When a light source is defined as D65, the absolute value of the b value of the 3D glass-ceramic sample 4 is 1.48; the transmittance of light at a wavelength of 360nm is 80.06%, the average transmittance of light at a wavelength of 380-780nm is 89.5%, the average transmittance of light at a wavelength of 360-400nm is 83.50%, and the haze is 0.25%.

step 6: subjecting the hot-bent 3D glass-ceramic obtained in step 5 to chemical strengthening, and immersing the glass in a molten of 100wt% NaNO₃ solution at a temperature of 450°C for 7 hours to finally obtain a finished 3D glass-ceramic product 4.

### Example 5 Preparation method of 3D glass-ceramic:

step 1: preparing and weighing the raw materials for the preparation of glass (in mole percent, containing the following components: SiO₂ of 66.96%; Al₂O₃ of 14.20%; MgO of 4.79%; Na₂O of 0.56%; Li₂O of 9.70%; rare earth oxide Er₂O₃ of 0.81%; nucleating agent (1.68% of P₂O₅; 1.30% of ZrO₂), and 0.4 wt% of NaCl and 0.4wt% of SnO₂ in the total mass of the nucleating agent and the raw materials for preparation as a fining agent, the total weight of the above-mentioned raw materials being 1713.6g, and after sufficient mixing, melting and forming in a high-temperature lifting furnace, a temperature of the melting and forming being 1630°C, and a melting time being 5h, pouring same into a mould made of ASTM SA213/TP310S austenitic chromium-nickel stainless steel to obtain a glass brick;
step 2 and step 3 which are the same as those in Example 4;
step 4 the process of trimming, cutting into pieces, rough grinding and polishing being the same as that in Example 1, wherein the crystallinity is determined to be 16 wt%;
step 5: subjecting the partially crystallized original glass sheet to 3D hot bending; and obtaining a 3D glass-ceramic sample 5 by using a hot bending process with the serial number 1 in table 2 (reference can be made to Example 1).

The above-mentioned 3D glass-ceramic sample 5 is tested, and the X-ray diffraction data after the test is analyzed using a ray diffractometer under the same instrument setting conditions as in example 1, wherein the crystallinity of the 3D glass-ceramic sample 5 after hot bending is 33 wt%, the precipitated crystal phase is β-quartz solid solution and β-spodumene, and the average particle size of the crystal is 22 nm. When a light source is defined as D65, the absolute value of the b value of the 3D glass-ceramic sample 5 is 3.24; the transmittance of light at a wavelength of 360nm is 72.00%, the average transmittance of light at a wavelength of 380-780nm is 88.90%, the average transmittance of light at a wavelength of 360-400nm is 78.60%, and the haze is 0.54%.

### Example 6 Preparation method of 3D glass-ceramic:

step 1: preparing and weighing the raw materials for the preparation of glass (in mole percent, containing the following components: SiO₂ of 66.95%; Al₂O₃ of 14.20%; MgO of 2.29%; Na₂O of 1.56%; ZnO of 1.00%, Li₂O of 9.70%; rare earth oxide La₂O₃ of 0.81%; nucleating agent (containing 1.68% of P₂O₅; 1.31% of ZrO₂, 0.5% of Y₂O₃), and 0.8 wt% of a fining agent NaCl in the total mass of the nucleating agent and the raw materials for preparation, the total weight of the above-mentioned raw materials being 1713.6g, and after sufficient mixing, melting and forming in a high-temperature lifting furnace, a temperature of the melting and forming being 1630°C, and a melting time being 5h, pouring same into a mould made of ASTM SA213/TP310S austenitic chromium-nickel stainless steel to obtain a glass brick;
step 2 which is the same as that in Example 4;
step 3: continuing the crystallization of the nucleated glass brick in a precision annealing furnace, wherein a crystallization temperature is 765°C and a crystallization time is 20min, so as to obtain a glass brick after partial crystallization;
step 4 the process of trimming, cutting into pieces, rough grinding and polishing being the same as that in Example 1, wherein the crystallinity is determined to be 12 wt%;
step 5: subjecting the partially crystallized original glass sheet to 3D hot bending; and obtaining a 3D glass-ceramic sample 6 by using a hot bending process with the serial number 1 in table 2 (reference can be made to Example 1).

The above-mentioned 3D glass-ceramic sample 6 is tested, and the X-ray diffraction data after the test is analyzed using a ray diffractometer under the same instrument setting conditions as in example 1, wherein the crystallinity of the 3D glass-ceramic sample 6 after hot bending is 23wt%, the precipitated crystalline phases are β-quartz solid solution and β-spodumene, and the average particle size of the crystals is 30nm. When a light source is defined as D65, the absolute value of the b value is 3.4; the transmittance of light at a wavelength of 360nm is 66.30%, the average transmittance of light at a wavelength of 380-780nm is 88.30%, the average transmittance of light at a wavelength of 360-400nm is 76.20%, and the haze is 0.96%.

### Example 7 Preparation method of 3D glass-ceramic:

step 1: preparing and weighing the raw materials for the preparation of glass (in mole percent, containing the following components: SiO₂ of 66.42%; Al₂O₃ of 14.09%; MgO of 4.75%; Na₂O of 1.55%; Li₂O of 9.62%, nucleating agent (containing 0.67% of P₂O₅; 1.3% of ZrO₂; 1.6% of TiO₂), and 0.8 wt% of NaCl in the total mass of the nucleating agent and the raw materials for preparation, the total weight of the above-mentioned raw materials being 1713.6g, and after sufficient mixing, melting and forming in a high-temperature lifting furnace, a temperature of the melting and forming being 1630°C, and a melting time being 5h, pouring same into a mould made of ASTM SA213/TP310S austenitic chromium-nickel stainless steel to obtain a glass brick;
step 2 which is the same as that in Example 4;
step 3: continuing the crystallization of the nucleated glass brick in a precision annealing furnace, wherein a crystallization temperature is 750°C and a crystallization time is 20min, so as to obtain a glass brick after partial crystallization;
step 4 the process of trimming, cutting into pieces, rough grinding and polishing being the same as that in Example 1, wherein the crystallinity is determined to be 17 wt%;
step 5: subjecting the partially crystallized original glass sheet to 3D hot bending; and obtaining a 3D glass-ceramic sample 7 by using a hot bending process with the serial number 1 in table 2 (reference can be made to Example 1).

The above-mentioned 3D glass-ceramic sample 7 is tested, and the X-ray diffraction data after the test is analyzed using a ray diffractometer under the same instrument setting conditions as in example 1, wherein the crystallinity of the 3D glass-ceramic sample 7 after hot bending is 34wt%, the precipitated crystal phase is β-quartz solid solution, and the average particle size of the crystal is 24 nm. When a light source is defined as D65, the absolute value of the b value of the 3D glass-ceramic sample 7 is 1.20; the transmittance of light at a wavelength of 360nm is 83.10%, the average transmittance of light at a wavelength of 380-780nm is 90.28%, the average transmittance of light at a wavelength of 360-400nm is 84.62%, and the haze is 0.15%.

step 6: subjecting the hot-bent 3D glass-ceramic obtained in step 5 to chemical strengthening, and immersing the glass in a molten of 100wt% NaNO₃ solution at a temperature of 430°C for 9 hours to finally obtain a finished 3D glass-ceramic product 7.

### Example 8 Preparation method of 3D glass-ceramic:

step 1: preparing and weighing the raw materials for the preparation of glass (in mole percent, containing the following components: SiO₂ of 66.95%; Al₂O₃ of 13.20%; CaO of 1.0%; MgO of 3.79%; Na₂O of 1.56%; Li₂O of 9.70%, nucleating agent (containing 1.68% of P₂O₅; 1.51% of ZrO₂; 0.61% of Ti₂O), and 0.7 wt% of a fining agentNaCl in the total mass of the nucleating agent and the raw materials for preparation, the total weight of the above-mentioned raw materials being 1711.9g, and after sufficient mixing, melting and forming in a high-temperature lifting furnace, a temperature of the melting and forming being 1630°C, and a melting time being 5h, pouring same into a mould made of ASTM SA213/TP310S austenitic chromium-nickel stainless steel to obtain a glass brick;
step 2: after cooling the glass brick obtained in step 1 to 800°C, transferring same to an annealing furnace for annealing (after the annealing process is maintaining at a temperature of 570°C for 5h, reducing the temperature to 30°C by 1°C/min), and then transferring same to a precision annealing furnace for nucleation, wherein a temperature of nucleation is 715°C, and a time of nucleation is 200min;
step 3: continuing the crystallization of the nucleated glass brick in a precision annealing furnace, wherein a crystallization temperature is 820°C and a crystallization time is 10 min, so as to obtain a glass brick after partial crystallization;
step 4 the process of trimming, cutting into pieces, rough grinding and polishing being the same as that in Example 1, wherein the crystallinity is determined to be 28 wt%;
step 5: subjecting the partially crystallized original glass sheet to 3D hot bending, the hot bending process including four preheating stations, three hot pressing stations, and two cooling stations. A temperature of the first preheating station is 480°C, a temperature of the second preheating station is 635°C, a temperature of the third preheating station is 685°C, and a temperature of the fourth preheating station is 715°C. A temperature of the first hot pressing station is 745°C, an upper pressure is 0.3 MPa, and a lower pressure is 0.6 MPa; a temperature of the second hot pressing station is 760°C, an upper pressure is 0 MPa, and a lower pressure is 0. MPa; a temperature of the third hot pressing station is 600°C, an upper pressure is 0 MPa and a lower pressure is 0 MPa. A temperature of the first cooling station is 450°C and a temperature of the second cooling station is 300°C. A working time of each of the preheating station, the hot pressing station and the cooling station is the same and is 80s. (i.e. using the hot bending process with the serial number 8 in table 2) obtaining a 3D glass-ceramic sample 8.

The above-mentioned 3D glass-ceramic sample 8 is tested, and the X-ray diffraction data after the test is analyzed using a ray diffractometer under the same instrument setting conditions as in example 1, wherein the crystallinity of the 3D glass-ceramic sample 8 after hot bending is 45wt%, the precipitated crystalline phases are β-quartz solid solution and β-spodumene, and the average particle size of the crystals is 37 nm. When a light source is defined as D65, the absolute value of the b value of the 3D glass-ceramic sample 8 is 2.90; the transmittance of light at a wavelength of 360nm is 76.11%, the average transmittance of light at a wavelength of 380-780nm is 88.10%, the average transmittance of light at a wavelength of 360-400nm is 78.80%, and the haze is 0.63%.

### Example 9 Preparation method of 3D glass-ceramic:

step 1: preparing and weighing the raw materials for the preparation of glass in mole percent, containing the following components: SiO₂ of 66.96%; Al₂O₃ of 13.20%; MgO of 5.79%; Na₂O of 1.26%; Li₂O of 8.00%; B₂O₃ of 1.00%; rare earth oxide Er₂O₃ of 0.9%; nucleating agent (1.68% of P₂O₅; 1.21% of ZrO₂), and 0.7 wt% of a fining agent NaCl in the total mass of the nucleating agent and the raw materials for preparation, the total weight of the above-mentioned raw materials being 1711.9g, and after sufficient mixing, melting and forming in a high-temperature lifting furnace, a temperature of the melting and forming being 1630°C, and a melting time being 5h, pouring same into a mould made of ASTM SA213/TP310S austenitic chromium-nickel stainless steel to obtain a glass brick;
step 2 and step 3 which are the same as those in Example 8;
step 4 the process of trimming, cutting into pieces, rough grinding and polishing being the same as that in Example 1, wherein the crystallinity is determined to be 19 wt%;
step 5: subjecting the partially crystallized original glass sheet to 3D hot bending; and obtaining a 3D glass-ceramic sample 9 by using a hot bending process with the serial number 8 in table 2 (reference can be made to Example 8).

The above-mentioned 3D glass-ceramic sample 9 is tested, and the X-ray diffraction data after the test is analyzed using a ray diffractometer under the same instrument setting conditions as in example 1, wherein the crystallinity of the 3D glass-ceramic sample 9 after hot bending is 32wt%, the precipitated crystal phase is β-quartz solid solution, and the average particle size of the crystal is 24 nm. When a light source is defined as D65, the absolute value of the b value of the 3D glass-ceramic sample 9 is 1.30; the transmittance of light at a wavelength of 360nm is 82.10%, the average transmittance of light at a wavelength of 380-780nm is 89.40%, the average transmittance of light at a wavelength of 360-400nm is 85.20%, and the haze is 0.21%.

### Example 10 Preparation method of 3D glass-ceramic:

step 1: preparing and weighing the raw materials for the preparation of glass in mole percent, containing the following components: SiO₂ of 71.65%; Al₂O₃ of 13.20%; MgO of 2.79%; Na₂O of 0.56%; Li₂O of 8.00%; rare earth oxide Er₂O₃of 0.61%; nucleating agent (1.68% of P₂O₅; 1.51% of ZrO₂), and 0.7 wt% of NaCl in the total mass of the nucleating agent and the raw materials for preparation, the total weight of the above-mentioned raw materials being 1711.9g, and after sufficient mixing, melting and forming in a high-temperature lifting furnace, a temperature of the melting and forming being 1630°C, and a melting time being 5h, pouring same into a mould made of ASTM SA213/TP310S austenitic chromium-nickel stainless steel to obtain a glass brick;
step 2 which is the same as that in Example 8;
step 3: continuing the crystallization of the nucleated glass brick in a precision annealing furnace, wherein a crystallization temperature is 800°C and a crystallization time is 10 min, so as to obtain a glass brick after partial crystallization;
step 4 the process of trimming, cutting into pieces, rough grinding and polishing being the same as that in Example 1, wherein the crystallinity is determined to be 20 wt%;
step 5: subjecting the partially crystallized original glass sheet to 3D hot bending; and obtaining a 3D glass-ceramic sample 10 by using a hot bending process with the serial number 8 in table 2 (reference can be made to Example 8).

The above-mentioned 3D glass-ceramic sample 10 is tested, and the X-ray diffraction data after the test is analyzed using a ray diffractometer under the same instrument setting conditions as in example 1, wherein the crystallinity of the 3D glass-ceramic sample 10 after hot bending is 37wt%, the precipitated crystal phase is β-quartz solid solution, and the average particle size of the crystal is 27 nm. When a light source is defined as D65, the absolute value of the b value is 1.60; the transmittance of light at a wavelength of 360nm is 81.13%, the average transmittance of light at a wavelength of 380-780nm is 89.60%, the average transmittance of light at a wavelength of 360-400nm is 82.80%, and the haze is 0.19%.

### Example 11 Preparation method of 3D glass-ceramic:

step 1: preparing and weighing the raw materials for the preparation of glass in mole percent, containing the following components: SiO₂ of 70.65%; Al₂O₃ of 13.20%; MgO of 2.79%; Na₂O of 1.56%; Li₂O of 8.00%; rare earth oxide La₂O₃of 0.61%; nucleating agent (1.68% of P₂O₅; 1.51% of ZrO₂), and 0.7 wt% of NaCl in the total mass of the nucleating agent and the raw materials for preparation, the total weight of the above-mentioned raw materials being 1711.9g, and after sufficient mixing, melting and forming in a high-temperature lifting furnace, a temperature of the melting and forming being 1630°C, and a melting time being 5h, pouring same into a mould made of ASTM SA213/TP310S austenitic chromium-nickel stainless steel to obtain a glass brick;
step 2 and step 3 which are the same as those in Example 10;
step 4 the process of trimming, cutting into pieces, rough grinding and polishing being the same as that in Example 1, wherein the crystallinity is determined to be 21 wt%;
step 5: subjecting the partially crystallized original glass sheet to 3D hot bending; and obtaining a 3D glass-ceramic sample 11 by using a hot bending process with the serial number 8 in table 2 (reference can be made to Example 8).

The above-mentioned 3D glass-ceramic sample 11 is tested, and the X-ray diffraction data after the test is analyzed using a ray diffractometer under the same instrument setting conditions as in example 1, wherein the crystallinity of the 3D glass-ceramic sample 11 after hot bending is 41wt%, the precipitated crystal phase is β-quartz solid solution, and the average particle size of the crystal is 22 nm. After determination, when the light source is defined as D65, the absolute value of b value is 1.10; the transmittance of light at a wavelength of 360nm is 82.40%, the average transmittance of light at a wavelength of 380-780nm is 90.60%, the average transmittance of light at a wavelength of 360-400nm is 85.30%, and the haze is 0.13%.

### Example 12 Preparation method of 3D glass-ceramic:

step 1: preparing and weighing the raw materials for the preparation of glass (in mole percent, containing the following components: SiO₂ of 70.65%; Al₂O₃ of 12.92%; MgO of 2.42%; ZnO of 0.80%; Na₂O of 1.05%; Li₂O of 8.25%;rare earth oxide La₂O₃ of 1.22%; nucleating agent (1.37% of P₂O₅; 1.32% of Y₂O₃), and 0.3 wt% of NaNO₃ and 0.4wt% of As₂O₃ in the total mass of the nucleating agent and the raw materials for preparation as a fining agent, the total weight of the above-mentioned raw materials being 1711.9g, and after sufficient mixing, melting and forming in a high-temperature lifting furnace, a temperature of the melting and forming being 1630°C, and a melting time being 5h, pouring same into a mould made of As2O SA213/TP310S austenitic chromium-nickel stainless steel to obtain a glass brick;
step 2: after cooling the glass brick obtained in step 1 to 800°C, transferring same to an annealing furnace for annealing (after the annealing process is maintaining at a temperature of 570°C for 5h, reducing the temperature to 30°C by 1°C/min), and then transferring same to a precision annealing furnace for nucleation, wherein a temperature of nucleation is 700°C, and a time of nucleation is 200 min;
step 3 which is the same as that in Example 5;
step 4 the process of trimming, cutting into pieces, rough grinding and polishing being the same as that in Example 1, wherein the crystallinity is determined to be 25 wt%;
step 5: subjecting the partially crystallized original glass sheet to 3D hot bending; and obtaining a 3D glass-ceramic sample 12 by using a hot bending process with the serial number 8 in table 2 (reference can be made to Example 8).

The above-mentioned 3D glass-ceramic sample 12 is tested, and the X-ray diffraction data after the test is analyzed using a ray diffractometer under the same instrument setting conditions as in example 1, wherein the crystallinity of the 3D glass-ceramic sample 12 after hot bending is 43 wt%, the precipitated crystal phase is β-quartz solid solution, and the average particle size of the crystal is 24 nm. After determination, when the light source is defined as D65, the absolute value of b value is 1.15; the transmittance of light at a wavelength of 360nm is 83.68%, the average transmittance of light at a wavelength of 380-780nm is 90.56%, the average transmittance of light at a wavelength of 360-400nm is 86.30%, and the haze is 0.17%.

step 6: subjecting the hot-bent 3D glass-ceramic obtained in step 5 to chemical strengthening under the same conditions as in Example 7, and finally obtaining a finished 3D glass-ceramic product 12.

### Example 13 Preparation method of 3D glass-ceramic:

step 1: preparing and weighing the raw materials for the preparation of glass in mole percent, containing the following components: SiO₂ of 71.15%; Al₂O₃ of 12.70%; MgO of 2.79%; Na₂O of 0.56%; Li₂O of 8.00%; B₂O₃ of 1.00%; rare earth oxide Nd₂O₃ of 0.61%; nucleating agent (1.68% of P₂O₅; 1.51% of CaF₂), and 0.7 wt% of a fining agent NaCl in the total mass of the nucleating agent and the raw materials for preparation, the total weight of the above-mentioned raw materials being 1711.9g, and after sufficient mixing, melting and forming in a high-temperature lifting furnace, a temperature of the melting and forming being 1630°C, and a melting time being 5h, pouring same into a mould made of ASTM SA213/TP310S austenitic chromium-nickel stainless steel to obtain a glass brick;
step 2: after cooling the glass brick obtained in step 1 to 800°C, transferring same to an annealing furnace for annealing (after the annealing process is maintaining at a temperature of 570°C for 5h, reducing the temperature to 30°C by 1°C/min), and then transferring same to a precision annealing furnace for nucleation, wherein a temperature of nucleation is 710°C, and a time of nucleation is 200min;
step 3 which is the same as that in Example 10;
step 4 the process of trimming, cutting into pieces, rough grinding and polishing being the same as that in Example 1, wherein the crystallinity is determined to be 18 wt%;
step 5: subjecting the partially crystallized original glass sheet to 3D hot bending; and obtaining a 3D glass-ceramic sample 13 by using a hot bending process with the serial number 8 in table 2 (reference can be made to Example 8).

The above-mentioned 3D glass-ceramic sample 13 is tested, and the X-ray diffraction data after the test is analyzed using a ray diffractometer under the same instrument setting conditions as in example 1, wherein the crystallinity of the 3D glass-ceramic sample 13 after hot bending is 34 wt%, the precipitated crystal phase is β-quartz solid solution, and the average particle size of the crystal is 35 nm. After determination, when the light source is defined as D65, the absolute value of b value is 1.75; the transmittance of light at a wavelength of 360nm is 81.03%, the average transmittance of light at a wavelength of 380-780nm is 89.00%, the average transmittance of light at a wavelength of 360-400nm is 82.30%, and the haze is 0.23%.

### Example 14 Preparation method of 3D glass-ceramic:

step 1: preparing and weighing the raw materials for the preparation of glass (in mole percent, containing the following components: SiO₂ of 68.00%; Al₂O₃ of 12.00%; MgO of 3.5%; Na₂O of 0.50%; Li₂O of 10.00%; B₂O₃ of 3.00%; nucleating agent (2.00% of P₂O₅; 1.00% of Y₂O₃), and 0.2 wt% of NaCl, 0.2wt% of SnO₂ and 0.2wt% of CeO₂ in the total mass of the nucleating agent and the raw materials for preparation as a fining agent, the total weight of the above-mentioned raw materials being 1711.9g, and after sufficient mixing, melting and forming in a high-temperature lifting furnace, a temperature of the melting and forming being 1630°C, and a melting time being 5h, pouring same into a mould made of ASTM SA213/TP310S austenitic chromium-nickel stainless steel to obtain a glass brick;
step 2 which is the same as that in Example 13;
step 3 which is the same as that in Example 1;
step 4 the process of trimming, cutting into pieces, rough grinding and polishing being the same as that in Example 1, wherein the crystallinity is determined to be 35 wt%;
step 5: subjecting the partially crystallized original glass sheet to 3D hot bending; and obtaining a 3D glass-ceramic sample 14 by using a hot bending process with the serial number 8 in table 2 (reference can be made to Example 8).

The above-mentioned 3D glass-ceramic sample 14 is tested, and the X-ray diffraction data after the test is analyzed using a ray diffractometer under the same instrument setting conditions as in example 1, wherein the crystallinity of the 3D glass-ceramic sample 14 after hot bending is 62wt%, the precipitated crystal phase is β-quartz solid solution+petalite, and the average particle size of the crystal is 27 nm. After determination, when the light source is defined as D65, the absolute value of b value is 1.11; the transmittance of light at a wavelength of 360nm is 84.20%, the average transmittance of light at a wavelength of 380-780nm is 90.90%, the average transmittance of light at a wavelength of 360-400nm is 85.80%, and the haze is 0.22%.

### Example 15 Preparation method of 3D glass-ceramic:

step 1: preparing and weighing the raw materials for the preparation of glass in mole percent, containing the following components: SiO₂ of 66.95%; Al₂O₃ of 11.20%; CaO 1.20%; MgO of 4.59%; Na₂O of 1.26%; Li₂O of 9.00%; B₂O₃ of 2.00%; rare earth oxide Nd₂O₃ of 0.61%; nucleating agent (1.68% of P₂O₅; 1.51% of ZrO₂), and 0.6 wt% of a fining agent NaCl in the total mass of the nucleating agent and the raw materials for preparation, the total weight of the above-mentioned raw materials being 1710.2g, and after sufficient mixing, melting and forming in a high-temperature lifting furnace, a temperature of the melting and forming being 1630°C, and a melting time being 5h, pouring same into a mould made of ASTM SA213/TP310S austenitic chromium-nickel stainless steel to obtain a glass brick;
step 2: after cooling the glass brick obtained in step 1 to 800°C, transferring same to an annealing furnace for annealing (after the annealing process is maintaining at a temperature of 550°C for 5h, reducing the temperature to 30°C by 1°C/min), and then transferring same to a precision annealing furnace for nucleation, wherein a temperature of nucleation is 690°C, and a time of nucleation is 200min;
step 3: continuing the crystallization of the nucleated glass brick in a precision annealing furnace, wherein a crystallization temperature is 750°C and a crystallization time is 30min, so as to obtain a glass brick after partial crystallization;
step 4 the process of trimming, cutting into pieces, rough grinding and polishing being the same as that in Example 1, wherein the crystallinity is determined to be 32 wt%;
step 5: subjecting the partially crystallized original glass sheet to 3D hot bending; and obtaining a 3D glass-ceramic sample 15 by using a hot bending process with the serial number 8 in table 2 (reference can be made to Example 8).

The above-mentioned 3D glass-ceramic sample 15 is tested, and the X-ray diffraction data after the test is analyzed using a ray diffractometer under the same instrument setting conditions as in example 1, wherein the crystallinity of the 3D glass-ceramic sample 15 after hot bending is 53wt%, the precipitated crystal phase is β-quartz solid solution+petalite, and the average particle size of the crystal is 24 nm. When a light source is defined as D65, the absolute value of the b value is 0.70; the transmittance of light at a wavelength of 360nm is 85.22%, the average transmittance of light at a wavelength of 380-780nm is 91.20%, the average transmittance of light at a wavelength of 360-400nm is 87.50%, and the haze is 0.16%.

### Example 16 Preparation method of 3D glass-ceramic:

step 1: preparing and weighing the raw materials for the preparation of glass (in mole percent, containing the following components: SiO₂ of 65.10%; Al₂O₃ of 8.51%; Na₂O of 1.00%; Li₂O of 20.83%; B₂O₃ of 1.52%; nucleating agent (0.82% of P₂O₅; 1.72% of ZrO₂, and 0.5% of NaF), and 0.3 wt% of NaNO₃ and 0.3wt% of As₂O₃ in the total mass of the nucleating agent and the raw materials for preparation as a fining agent, the total weight of the above-mentioned raw materials being 1710.2g, and after sufficient mixing, melting and forming in a high-temperature lifting furnace, a temperature of the melting and forming being 1620°C, and a melting time being 5h, pouring same into a mould made of ASTM SA213/TP310S austenitic chromium-nickel stainless steel to obtain a glass brick;
step 2: after cooling the glass brick obtained in step 1 to 800°C, transferring same to an annealing furnace for annealing (after the annealing process is maintaining at a temperature of 550°C for 5h, reducing the temperature to 30°C by 1°C/min), and then transferring same to a precision annealing furnace for nucleation, wherein a temperature of nucleation is 670°C, and a time of nucleation is 200min;
step 3: continuing the crystallization of the nucleated glass brick in a precision annealing furnace, wherein a crystallization temperature is 710°C and a crystallization time is 100min, so as to obtain a glass brick after partial crystallization;
step 4 the process of trimming, cutting into pieces, rough grinding and polishing being the same as that in Example 1, wherein the crystallinity is determined to be 40 wt%;
step 5: performing 3D hot bending on the partially crystallized original glass sheet, wherein the hot bending process uses hot bending process with the serial number of 6 in table 2, and the hot bending includes four preheating stations, three hot pressing stations and two cooling stations. A temperature of the first preheating station is 450°C, a temperature of the second preheating station is 600°C, a temperature of the third preheating station is 650°C, and a temperature of the fourth preheating station is 710°C. A temperature of the first hot pressing station is 730°C, an upper pressure is 0.3 MPa, and a lower pressure is 0.3 MPa; a temperature of the second hot pressing station is 740°C, an upper pressure is 0 MPa, and a lower pressure is 0. MPa; a temperature of the third hot pressing station is 600°C, an upper pressure is 0 MPa and a lower pressure is 0 MPa. A temperature of the first cooling station is 450°C and a temperature of the second cooling station is 300°C. A working time of each of the preheating station, the hot pressing station and the cooling station is the same and is 60s. A 3D glass-ceramic sample 16 is obtained.

The above-mentioned 3D glass-ceramic sample 16 is tested, and the X-ray diffraction data after the test is analyzed using a ray diffractometer under the same instrument setting conditions as in example 1, wherein the crystallinity of the 3D glass-ceramic sample 16 after hot bending is 60wt%, the precipitated crystal phase is β-quartz solid solution+petalite, and the average particle size of the crystal is 21 nm. After determination, when the light source is defined as D65, the absolute value of b value is 0.62; the transmittance of light at a wavelength of 360nm is 86.02%, the average transmittance of light at a wavelength of 380-780nm is 91.10%, the average transmittance of light at a wavelength of 360-400nm is 88.10%, and the haze is 0.17%.

step 6: subjecting the hot-bent 3D glass-ceramic obtained in step 5 to chemical strengthening, and immersing the glass in a molten of 100wt% NaNO₃ solution at a temperature of 430°C for 11 hours to finally obtain a finished 3D glass-ceramic product 16.

### Example 17 Preparation method of 3D glass-ceramic:

step 1: preparing and weighing the raw materials for the preparation of glass (in mole percent, containing the following components: SiO₂ of 68.00%; Al₂O₃ of 5.50%; CaO of 0.50%; Na₂O of 1.00%; Li₂O of 21.00%; B₂O₃ of 1.50%, nucleating agent (0.80% of P₂O₅; 1.70% of ZrO₂), and 0.5 wt% of a fining agent NaCl in the total mass of the nucleating agent and the raw materials for preparation, the total weight of the above-mentioned raw materials being 1708.5g, and after sufficient mixing, melting and forming in a high-temperature lifting furnace, a temperature of the melting and forming being 1630°C, and a melting time being 5h, pouring same into a mould made of ASTM SA213/TP310S austenitic chromium-nickel stainless steel to obtain a glass brick;
step 2: after cooling the glass brick obtained in step 1 to 800°C, transferring same to an annealing furnace for annealing (after the annealing process is maintaining at a temperature of 500°C for 5h, reducing the temperature to 30°C by 1°C/min), and then transferring same to a precision annealing furnace for nucleation, wherein a temperature of nucleation is 570°C, and a time of nucleation is 200min;
step 3: continuing the crystallization of the nucleated glass brick in a precision annealing furnace, wherein a crystallization temperature is 640°C and a crystallization time is 100min, so as to obtain a glass brick after partial crystallization;
step 4 the process of trimming, cutting into pieces, rough grinding and polishing being the same as that in Example 1, wherein the crystallinity is determined to be 78 wt%;
step 5: subjecting the partially crystallized original glass sheet to 3D hot bending; and obtaining a 3D glass-ceramic sample 17 by using a hot bending process with the serial number 6 in table 2 (reference can be made to Example 16).

The above-mentioned 3D glass-ceramic sample 17 is tested, and the X-ray diffraction data after the test is analyzed using a ray diffractometer under the same instrument setting conditions as in example 1, wherein the crystallinity of the 3D glass-ceramic sample 17 after hot bending is 91wt%, the precipitated crystal phase is β-quartz solid solution+petalite, and the average particle size of the crystal is 21 nm. When a light source is defined as D65, the absolute value of the b value is 1.0; the transmittance of light at a wavelength of 360nm is 84.32%, the average transmittance of light at a wavelength of 380-780nm is 90.80%, the average transmittance of light at a wavelength of 360-400nm is 86.40%, and the haze is 0.16%.

### Example 18 Preparation method of 3D glass-ceramic:

step 1: preparing and weighing the raw materials for the preparation of glass (in mole percent, containing the following components: SiO₂ of 69.14%; Al₂O₃ of 5.21%; Na₂O of 0.46%; Li₂O of 21.13%; B₂O₃ of 1.52%, nucleating agent (0.82% of P₂O₅; 1.72% of ZrO₂), and 0.5 wt% of a fining agent NaCl in the total mass of the nucleating agent and the raw materials for preparation, the total weight of the above-mentioned raw materials being 1708.5g, and after sufficient mixing, melting and forming in a high-temperature lifting furnace, a temperature of the melting and forming being 1550°C, and a melting time being 5h, pouring same into a mould made of ASTM SA213/TP310S austenitic chromium-nickel stainless steel to obtain a glass brick;
step 2: after cooling the glass brick obtained in step 1 to 800°C, transferring same to an annealing furnace for annealing (after the annealing process is maintaining at a temperature of 490°C for 5h, reducing the temperature to 30°C by 1°C/min), and then transferring same to a precision annealing furnace for nucleation, wherein a temperature of nucleation is 530°C, and a time of nucleation is 200min;
step 3: continuing the crystallization of the nucleated glass brick in a precision annealing furnace, wherein a crystallization temperature is 640°C and a crystallization time is 120min, so as to obtain a glass brick after partial crystallization;
step 4 the process of trimming, cutting into pieces, rough grinding and polishing being the same as that in Example 1, wherein the crystallinity is determined to be 72 wt%;
step 5: performing 3D hot bending on the partially crystallized original glass sheet, wherein the hot bending process uses hot bending process with the serial number of 13 in table 2, and the hot bending includes four preheating stations, three hot pressing stations and two cooling stations. A temperature of the first preheating station is 450°C, a temperature of the second preheating station is 600°C, a temperature of the third preheating station is 650°C, and a temperature of the fourth preheating station is 710°C. A temperature of the first hot pressing station is 720°C, an upper pressure is 0.3 MPa, and a lower pressure is 0.3 MPa; a temperature of the second hot pressing station is 720°C, an upper pressure is 0 MPa, and a lower pressure is 0. MPa; a temperature of the third hot pressing station is 600°C, an upper pressure is 0 MPa and a lower pressure is 0 MPa. A temperature of the first cooling station is 450°C and a temperature of the second cooling station is 300°C. A working time of each of the preheating station, the hot pressing station and the cooling station is the same and is 90s. A 3D glass-ceramic sample 18 is obtained.

The above-mentioned 3D glass-ceramic sample 18 is tested, and the X-ray diffraction data after the test is analyzed using a ray diffractometer under the same instrument setting conditions as in example 1, wherein the crystallinity of the 3D glass-ceramic sample 18 after hot bending is 92wt%, the precipitated crystal phase is lithium disilicate + petalite, and the average particle size of the crystal is 18 nm. When a light source is defined as D65, the absolute value of the b value is 0.43; the transmittance of light at a wavelength of 360nm is 87.17%, the average transmittance of light at a wavelength of 380-780nm is 92.10%, the average transmittance of light at a wavelength of 360-400nm is 90.30%, and the haze is 0.11%.

### Example 19 Preparation method of 3D glass-ceramic:

steps 1-2 which are the same as those of Example 18;
step 3: continuing the crystallization of the nucleated glass brick in a precision annealing furnace, wherein a crystallization temperature is 630°C and a crystallization time is 120min, so as to obtain a glass brick after partial crystallization;
step 4 the process of trimming, cutting into pieces, rough grinding and polishing being the same as that in Example 1, wherein the crystallinity is determined to be 60 wt%;
step 5: subjecting the partially crystallized original glass sheet to 3D hot bending; and obtaining a 3D glass-ceramic sample 19 by using a hot bending process with the serial number 13 in table 2 (reference can be made to Example 18).

The above-mentioned 3D glass-ceramic sample 19 is tested, and the X-ray diffraction data after the test is analyzed using a ray diffractometer under the same instrument setting conditions as in example 1, wherein the crystallinity of the 3D glass-ceramic sample 19 after hot bending is 86wt%, the precipitated crystal phase is lithium disilicate+petalite, and the average particle size of the crystal is 19 nm. When a light source is defined as D65, the absolute value of the b value is 0.44; the transmittance of light at a wavelength of 360nm is 87.31%, the average transmittance of light at a wavelength of 380-780nm is 92.30%, the average transmittance of light at a wavelength of 360-400nm is 89.50%, and the haze is 0.11%.

### Example 20 Preparation method of 3D glass-ceramic:

steps 1-2 which are the same as those of Example 18;
step 3: continuing the crystallization of the nucleated glass brick in a precision annealing furnace, wherein a crystallization temperature is 625°C and a crystallization time is 120min, so as to obtain a glass brick after partial crystallization;
step 4 the process of trimming, cutting into pieces, rough grinding and polishing being the same as that in Example 1, wherein the crystallinity is determined to be 51 wt%;
step 5: subjecting the partially crystallized original glass sheet to 3D hot bending; and obtaining a 3D glass-ceramic sample 20 by using a hot bending process with the serial number 13 in table 2 (reference can be made to Example 18).

The above-mentioned 3D glass-ceramic sample 20 is tested, and the X-ray diffraction data after the test is analyzed using a ray diffractometer under the same instrument setting conditions as in example 1, wherein the crystallinity of the 3D glass-ceramic sample 20 after hot bending is 73wt%, the precipitated crystal phase is lithium disilicate + petalite, and the average particle size of the crystal is 23 nm. When a light source is defined as D65, the absolute value of the b value is 0.58; the transmittance of light at a wavelength of 360nm is 86.20%, the average transmittance of light at a wavelength of 380-780nm is 92.10%, the average transmittance of light at a wavelength of 360-400nm is 87.80%, and the haze is 0.10%.

### Example 21 Preparation method of 3D glass-ceramic:

steps 1-2 which are the same as those of Example 18;
step 3: continuing the crystallization of the nucleated glass brick in a precision annealing furnace, wherein a crystallization temperature is 620°C and a crystallization time is 120min, so as to obtain a glass brick after partial crystallization;
step 4 the process of trimming, cutting into pieces, rough grinding and polishing being the same as that in Example 1, wherein the crystallinity is determined to be 30 wt%;
step 5: subjecting the partially crystallized original glass sheet to 3D hot bending; and obtaining a 3D glass-ceramic sample 21 by using a hot bending process with the serial number 13 in table 2 (reference can be made to Example 18).

The above-mentioned 3D glass-ceramic sample 21 is tested, and the X-ray diffraction data after the test is analyzed using a ray diffractometer under the same instrument setting conditions as in example 1, wherein the crystallinity of the 3D glass-ceramic sample 21 after hot bending is 65wt%, the precipitated crystal phase is lithium disilicate + petalite, and the average particle size of the crystal is 25 nm. After determination, when the light source is defined as D65, the absolute value of b value is 0.62; the transmittance of light at a wavelength of 360nm is 85.14%, the average transmittance of light at a wavelength of 380-780nm is 91.60%, the average transmittance of light at a wavelength of 360-400nm is 88.10%, and the haze is 0.15%.

### Example 22 Preparation method of 3D glass-ceramic:

step 1: preparing and weighing the raw materials for the preparation of glass (in mole percent, containing the following components: SiO₂ of 69.5%; Al₂O₃ of 5.3%; Na₂O of 1.60%; Li₂O of 20.5%; B₂O₃ of 0.55%, nucleating agent (0.8% of P₂O₅; 1.75% of ZrO₂), and 0.5 wt% of a fining agent NaCl in the total mass of the nucleating agent and the raw materials for preparation, the total weight of the above-mentioned raw materials being 1708.5g, and after sufficient mixing, melting and forming in a high-temperature lifting furnace, a temperature of the melting and forming being 1550°C, and a melting time being 5h, pouring same into a mould made of ASTM SA213/TP310S austenitic chromium-nickel stainless steel to obtain a glass brick;
step 2: after cooling the glass brick obtained in step 1 to 800°C, transferring same to an annealing furnace for annealing (after the annealing process is maintaining at a temperature of 480°C for 5h, reducing the temperature to 30°C by 1°C/min), and then transferring same to a precision annealing furnace for nucleation, wherein a temperature of nucleation is 560°C, and a time of nucleation is 200min;
step 3: continuing the crystallization of the nucleated glass brick in a precision annealing furnace, wherein a crystallization temperature is 630°C and a crystallization time is 100min, so as to obtain a glass brick after partial crystallization;
step 4 the process of trimming, cutting into pieces, rough grinding and polishing being the same as that in Example 1, wherein the crystallinity is determined to be 39 wt%;
step 5: performing 3D hot bending on the partially crystallized original glass sheet, wherein the hot bending process uses hot bending process with the serial number of 15 in table 2, and the hot bending includes four preheating stations, three hot pressing stations and two cooling stations. A temperature of the first preheating station is 450°C, a temperature of the second preheating station is 600°C, a temperature of the third preheating station is 650°C, and a temperature of the fourth preheating station is 740°C. A temperature of the first hot pressing station is 770°C, an upper pressure is 0.1 MPa, and a lower pressure is 0.1 MPa; a temperature of the second hot pressing station is 760°C, an upper pressure is 0.1 MPa, and a lower pressure is 0. 1 MPa; a temperature of the third hot pressing station is 600°C, an upper pressure is 0 MPa and a lower pressure is 0 MPa. A temperature of the first cooling station is 450°C and a temperature of the second cooling station is 300°C. A working time of each of the preheating station, the hot pressing station and the cooling station is the same and is 90s. A 3D glass-ceramic sample 22 is obtained.

The above-mentioned 3D glass-ceramic sample 22 is tested, and the X-ray diffraction data after the test is analyzed using a ray diffractometer under the same instrument setting conditions as in example 1, wherein the crystallinity of the 3D glass-ceramic sample 22 after hot bending is 85wt%, the precipitated crystal phase is petalite+lithium disilicate, and the average particle size of the crystal is 19nm. When a light source is defined as D65, the absolute value of the b value is 0.42; the transmittance of light at a wavelength of 360nm is 88.23%, the average transmittance of light at a wavelength of 380-780nm is 92.10%, the average transmittance of light at a wavelength of 360-400nm is 89.30%, and the haze is 0.15%.

step 6: subjecting the hot-bent 3D glass-ceramic obtained in step 5 to chemical strengthening, and immersing the glass in a molten of 100wt% NaNO₃ solution at a temperature of 450°C for 9 hours to finally obtain a finished 3D glass-ceramic product 22.

### Example 23 Preparation method of 3D glass-ceramic:

step 1: preparing and weighing the raw materials for the preparation of glass (in mole percent, containing the following components: SiO₂ of 71.80%; Al₂O₃ of 4.80%; MgO of 1.40%; Na₂O of 1.00%; Li₂O of 18.80%; ZnO of 0.3%, nucleating agent (0.8% of P₂O₅; 1.1% of ZrO₂), and 0.5 wt% of a fining agent NaCl in the total mass of the nucleating agent and the raw materials for preparation, the total weight of the above-mentioned raw materials being 1708.5g, and after sufficient mixing, melting and forming in a high-temperature lifting furnace, a temperature of the melting and forming being 1550°C, and a melting time being 5h, pouring same into a mould made of ASTM SA213/TP310S austenitic chromium-nickel stainless steel to obtain a glass brick;
step 2: after cooling the glass brick obtained in step 1 to 800°C, transferring same to an annealing furnace for annealing (after the annealing process is maintaining at a temperature of 480°C for 5h, reducing the temperature to 30°C by 1°C/min), and then transferring same to a precision annealing furnace for nucleation, wherein a temperature of nucleation is 545°C, and a time of nucleation is 200min;
step 3: continuing the crystallization of the nucleated glass brick in a precision annealing furnace, wherein a crystallization temperature is 610°C and a crystallization time is 200min, so as to obtain a glass brick after partial crystallization;
step 4 the process of trimming, cutting into pieces, rough grinding and polishing being the same as that in Example 1, wherein the crystallinity is determined to be 45 wt%;
step 5: subjecting the partially crystallized original glass sheet to 3D hot bending; and obtaining a 3D glass-ceramic sample 23 by using a hot bending process with the serial number 15 in table 2 (reference can be made to Example 22);

The above-mentioned 3D glass-ceramic sample 23 is tested, and the X-ray diffraction data after the test is analyzed using a ray diffractometer under the same instrument setting conditions as in example 1, wherein the crystallinity of the 3D glass-ceramic sample 23 after hot bending is 92wt%, the precipitated crystal phase is petalite+lithium disilicate, and the average particle size of the crystal is 20 nm. When a light source is defined as D65, the absolute value of the b value is 0.61; the transmittance of light at a wavelength of 360nm is 85.82%, the average transmittance of light at a wavelength of 380-780nm is 91.50%, the average transmittance of light at a wavelength of 360-400nm is 88.00%, and the haze is 0.15%.

step 6: subjecting the hot-bent 3D glass-ceramic obtained in step 5 to chemical strengthening under the same conditions as in Example 22, and finally obtaining a finished 3D glass-ceramic product 23.

### Example 24 Preparation method of 3D glass-ceramic:

step 1: preparing and weighing the raw materials for the preparation of glass (in mole percent, containing the following components: SiO₂ of 69.50%; Al₂O₃ of 4.25%; Na₂O of 1.60%; Li₂O of20.5%; B₂O₃ of 1.60%, nucleating agent (0.8% of P₂O₅; 1.75% of ZrO₂), and 0.5 wt% of a fining agent NaCl in the total mass of the nucleating agent and the raw materials for preparation, the total weight of the above-mentioned raw materials being 1708.5g, and after sufficient mixing, melting and forming in a high-temperature lifting furnace, a temperature of the melting and forming being 1550°C, and a melting time being 5h, pouring same into a mould made of ASTM SA213/TP310S austenitic chromium-nickel stainless steel to obtain a glass brick;
step 2: after cooling the glass brick obtained in step 1 to 800°C, transferring same to an annealing furnace for annealing (after the annealing process is maintaining at a temperature of 480°C for 5h, reducing the temperature to 30°C by 1°C/min), and then transferring same to a precision annealing furnace for nucleation, wherein a temperature of nucleation is 538°C, and a time of nucleation is 200min;
step 3: continuing the crystallization of the nucleated glass brick in a precision annealing furnace, wherein a crystallization temperature is 620°C and a crystallization time is 100min, so as to obtain a glass brick after partial crystallization;
step 4 the process of trimming, cutting into pieces, rough grinding and polishing being the same as that in Example 1, wherein the crystallinity is determined to be 43 wt%;
step 5: performing 3D hot bending on the partially crystallized original glass sheet, wherein the hot bending process uses hot bending process with the serial number of 14 in table 2, and the hot bending includes four preheating stations, three hot pressing stations and two cooling stations. A temperature of the first preheating station is 450°C, a temperature of the second preheating station is 600°C, a temperature of the third preheating station is 650°C, and a temperature of the fourth preheating station is 720°C. A temperature of the first hot pressing station is 750°C, an upper pressure is 0.1 MPa, and a lower pressure is 0.1 MPa; a temperature of the second hot pressing station is 760°C, an upper pressure is 0.1 MPa, and a lower pressure is 0. 1 MPa; a temperature of the third hot pressing station is 600°C, an upper pressure is 0 MPa and a lower pressure is 0 MPa. A temperature of the first cooling station is 450°C and a temperature of the second cooling station is 300°C. A working time of each of the preheating station, the hot pressing station and the cooling station is the same and is 90s. A 3D glass-ceramic sample 24 is obtained.

The above-mentioned 3D glass-ceramic sample 24 is tested with light having a wavelength of 360 nm as the absolute value of b, and the X-ray diffraction data after the test is analyzed using a ray diffractometer under the same instrument setting conditions as in example 1, wherein the crystallinity of the 3D glass-ceramic sample 24 after hot bending is 82wt%, the precipitated crystal phase is petalite+lithium disilicate, and the average particle size of the crystal is 22 nm. When a light source is defined as D65, the absolute value of the b value is 0.43; the transmittance of light at a wavelength of 360nm is 88.17%, the average transmittance of light at a wavelength of 380-780nm is 92.60%, the average transmittance of light at a wavelength of 360-400nm is 89.60%, and the haze is 0.11%.

step 6: subjecting the hot-bent 3D glass-ceramic obtained in step 5 to chemical strengthening under the same conditions as in Example 22, and finally obtaining a finished 3D glass-ceramic product 24.

### Example 25 Preparation method of 3D glass-ceramic:

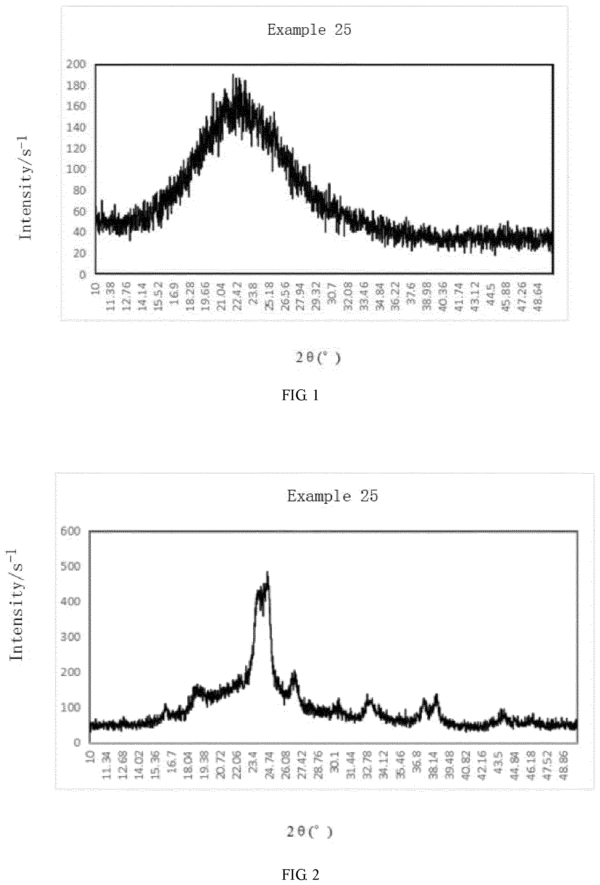

step 1: preparing and weighing the raw materials for the preparation of glass (in mole percent, containing the following components: SiO₂ of 68.76%; Al₂O₃ of 4.13%; MgO of 0.98%, ZnO of 0.98%; Na₂O of 0.45%; Li₂O of 20.71%; B₂O₃ of 1.49%, nucleating agent (0.81% of P₂O₅; 1.69% of ZrO₂), and 0.5 wt% of a fining agent NaCl in the total mass of the nucleating agent and the raw materials for preparation, the total weight of the above-mentioned raw materials being 1708.5g, and after sufficient mixing, melting and forming in a high-temperature lifting furnace, a temperature of the melting and forming being 1550°C, and a melting time being 5h, pouring same into a mould made of ASTM SA213/TP310S austenitic chromium-nickel stainless steel to obtain a glass brick;
step 2: after cooling the glass brick obtained in step 1 to 800°C, transferring same to an annealing furnace for annealing (after the annealing process is maintaining at a temperature of 480°C for 5h, reducing the temperature to 30°C by 1°C/min), performing an XRD test on the obtained annealed glass brick to obtain fig. 1, where it can be seen that the glass brick is in a glassy state and then transferring same to a precision annealing furnace for nucleation, wherein a temperature of nucleation is 540°C, and a time of nucleation is 200min;
step 3 which is the same as that in Example 24;
step 4 the process of trimming, cutting into pieces, rough grinding and polishing being the same as that in Example 1, wherein the crystallinity is determined to be 47 wt%; The resulting partially crystallized original glass sheet is subjected to an XRD test, resulting in fig.2, which can be seen to be in a partially crystallized state.
step 5: subjecting the partially crystallized original glass sheet to 3D hot bending; and obtaining a 3D glass-ceramic sample 25 by using a hot bending process with the serial number 14 in table 2 (reference can be made to Example 24).

The above-mentioned 3D glass-ceramic sample 25 is tested, and the X-ray diffraction data after the test is analyzed using a ray diffractometer under the same instrument setting conditions as in example 1, wherein the crystallinity of the 3D glass-ceramic sample 25 after hot bending is 87wt%, the precipitated crystal phase is lithium disilicate+petalite+β-quartz solid solution, and the average particle size of the crystal is 18 nm. When a light source is defined as D65, the absolute value of the b value is 0.39; the transmittance of light at a wavelength of 360nm is 88.80%, the average transmittance of light at a wavelength of 380-780nm is 92.70%, the average transmittance of light at a wavelength of 360-400nm is 89.80%, and the haze is 0.09%.

step 5: subjecting the hot-bent 3D glass-ceramic obtained in step 4 to chemical strengthening, and immersing the glass in a molten of 100wt% NaNO₃ solution at a temperature of 450°C for 10 hours to finally obtain a finished 3D glass-ceramic product 25.

### Example 26 Preparation method of 3D glass-ceramic:

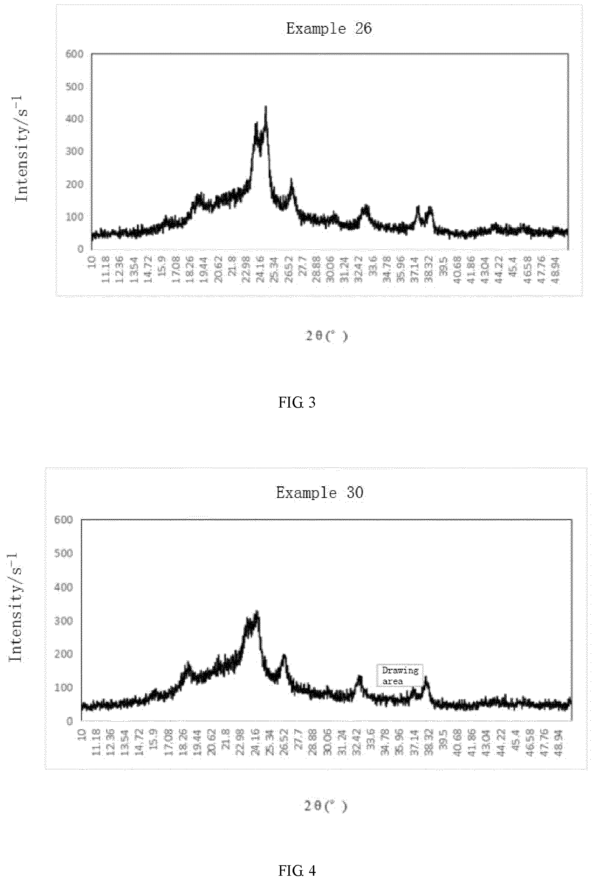

step 1: preparing and weighing the raw materials for the preparation of glass (in mole percent, containing the following components: SiO₂ of 68.73%; Al₂O₃ of 4.13%; MgO of 0.98%, ZnO of 1.68%; Na₂O of 0.45%; Li₂O of 20.01%; B₂O₃ of 1.49%, nucleating agent (0.81% of P₂O₅; 1.72% of ZrO₂), and 0.5 wt% of a fining agent NaCl in the total mass of the nucleating agent and the raw materials for preparation, the total weight of the above-mentioned raw materials being 1708.5g, and after sufficient mixing, melting and forming in a high-temperature lifting furnace, a temperature of the melting and forming being 1550°C, and a melting time being 5h, pouring same into a mould made of ASTM SA213/TP310S austenitic chromium-nickel stainless steel to obtain a glass brick;
step 2 which is the same as that in Example 25;
step 3: continuing the crystallization of the nucleated glass brick in a precision annealing furnace, wherein a crystallization temperature is 615°C and a crystallization time is 120min, so as to obtain a glass brick after partial crystallization;
step 4 the process of trimming, cutting into pieces, rough grinding and polishing being the same as that in Example 1, wherein the crystallinity is determined to be 55 wt%; The resulting partially crystallized original glass sheet is subjected to an XRD test, resulting in fig.3, which can be seen to be in a partially crystallized state.
step 5: subjecting the partially crystallized original glass sheet to 3D hot bending; and obtaining a 3D glass-ceramic sample 26 by using a hot bending process with the serial number 15 in table 2 (reference can be made to Example 22).

The above-mentioned 3D glass-ceramic sample 26 is tested, and the X-ray diffraction data after the test is analyzed using a ray diffractometer under the same instrument setting conditions as in example 1, wherein the crystallinity of the 3D glass-ceramic sample 30 after hot bending is 91wt%, the precipitated crystal phase is petalite, and the average particle size of the crystal is 23 nm. When a light source is defined as D65, the absolute value of the b value is 0.42; the transmittance of light at a wavelength of 360nm is 88.13%, the average transmittance of light at a wavelength of 380-780nm is 92.80%, the average transmittance of light at a wavelength of 360-400nm is 89.90%, and the haze is 0.11%.

### Example 27 Preparation method of 3D glass-ceramic:

step 1: same as Example 18, except for the temperature of the melting and forming process, the temperature of the melting and forming in the present example being 1610°C;
step 2: after cooling the glass brick obtained in step 1 to 800°C, transferring same to an annealing furnace for annealing (after the annealing process is maintaining at a temperature of 460°C for 5h, reducing the temperature to 30°C by 1°C/min), and then transferring same to a precision annealing furnace for nucleation, wherein a temperature of nucleation is 480°C, and a time of nucleation is 360min;
step 3: continuing the crystallization of the nucleated glass brick in a precision annealing furnace, wherein a crystallization temperature is 550°C and a crystallization time is 300min, so as to obtain a glass brick after partial crystallization;
step 4 the process of trimming, cutting into pieces, rough grinding and polishing being the same as that in Example 1, wherein the crystallinity is determined to be 6 wt%;
step 5: subjecting the partially crystallized original glass sheet to 3D hot bending; and obtaining a 3D glass-ceramic sample 27 by using a hot bending process with the serial number 1 in table 2 (same as Example 1).

The above-mentioned 3D glass-ceramic sample 27 is tested, and the X-ray diffraction data after the test is analyzed using a ray diffractometer under the same instrument setting conditions as in example 1, wherein the crystallinity of the 3D glass-ceramic sample 27 after hot bending is 14wt%, the precipitated crystal phase is lithium silicate, and the average particle size of the crystal is 10 nm. When a light source is defined as D65, the absolute value of the b value of the 3D glass-ceramic sample 27 is 0.15; the transmittance of light at a wavelength of 360nm is 90.60%, the average transmittance of light at a wavelength of 380-780nm is 93.00%, the average transmittance of light at a wavelength of 360-400nm is 91.40%, and the haze is 0.07%.

### Example 28 Preparation method of 3D glass-ceramic:

step 1 which is the same as that in Example 27;
step 2: after cooling the glass brick obtained in step 1 to 800°C, transferring same to an annealing furnace for annealing (after the annealing process is maintaining at a temperature of 460°C for 5h, reducing the temperature to 30°C by 1°C/min), and then transferring same to a precision annealing furnace for nucleation, wherein a temperature of nucleation is 500°C, and a time of nucleation is 300min;
step 3: continuing the crystallization of the nucleated glass brick in a precision annealing furnace, wherein a crystallization temperature is 570°C and a crystallization time is 280min, so as to obtain a glass brick after partial crystallization;
step 4 the process of trimming, cutting into pieces, rough grinding and polishing being the same as that in Example 1, wherein the crystallinity is determined to be 8 wt%;
step 5: subjecting the partially crystallized original glass sheet to 3D hot bending; and obtaining a 3D glass-ceramic sample 28 by using a hot bending process with the serial number 1 in table 2.

The above-mentioned 3D glass-ceramic sample 28 is tested, and the X-ray diffraction data after the test is analyzed using a ray diffractometer under the same instrument setting conditions as in example 1, wherein the crystallinity of the 3D glass-ceramic sample 28 after hot bending is 16wt%, the precipitated crystal phase is lithium silicate, and the average particle size of the crystal is 15 nm. When a light source is defined as D65, the absolute value of the b value of the 3D glass-ceramic sample 28 is 0.25; the transmittance of light at a wavelength of 360nm is 90.10%, the average transmittance of light at a wavelength of 380-780nm is 92.80%, the average transmittance of light at a wavelength of 360-400nm is 91.20%, and the haze is 0.09%.

### Example 29 Preparation method of 3D glass-ceramic:

step 1 which is the same as that in Example 27;
step 2 which is the same as that in Example 28;
step 3: continuing the crystallization of the nucleated glass brick in a precision annealing furnace, wherein a crystallization temperature is 560°C and a crystallization time is 240min, so as to obtain a glass brick after partial crystallization;
step 4 the process of trimming, cutting into pieces, rough grinding and polishing being the same as that in Example 1, wherein the crystallinity is determined to be 9 wt%;
step 5: subjecting the partially crystallized original glass sheet to 3D hot bending; and obtaining a 3D glass-ceramic sample 28 by using a hot bending process with the serial number 1 in table 2.

The above-mentioned 3D glass-ceramic sample 29 is tested, and the X-ray diffraction data after the test is analyzed using a ray diffractometer under the same instrument setting conditions as in example 1, wherein the crystallinity of the 3D glass-ceramic sample 29 after hot bending is 17wt%, the precipitated crystal phase is lithium silicate, and the average particle size of the crystal is 13 nm. When a light source is defined as D65, the absolute value of the b value of the 3D glass-ceramic sample 29 is 0.23; the transmittance of light at a wavelength of 360nm is 90.50%, the average transmittance of light at a wavelength of 380-780nm is 92.70%, the average transmittance of light at a wavelength of 360-400nm is 91.50%, and the haze is 0.08%.

### Example 30 Preparation method of 3D glass-ceramic:

step 1 which is the same as that in Example 17;
step 2: after cooling the glass brick obtained in step 1 to 800°C, transferring same to an annealing furnace for annealing (after the annealing process is maintaining at a temperature of 500°C for 5h, reducing the temperature to 30°C by 1°C/min), and then transferring same to a precision annealing furnace for nucleation, wherein a temperature of nucleation is 600°C, and a time of nucleation is 80min;
step 3: continuing the crystallization of the nucleated glass brick in a precision annealing furnace, wherein a crystallization temperature is 610°C and a crystallization time is 180min, so as to obtain a glass brick after partial crystallization;
step 4 the process of trimming, cutting into pieces, rough grinding and polishing being the same as that in Example 1, wherein the crystallinity is determined to be 37 wt%;
step 5: subjecting the partially crystallized original glass sheet to 3D hot bending; and obtaining a 3D glass-ceramic sample 30 by using a hot bending process with the serial number 3 in table 2. The resulting partially crystallized original glass sheet is subjected to an XRD test, resulting in fig.4, which can be seen to be in a partially crystallized state.

The above-mentioned 3D glass-ceramic sample 30 is tested, and the X-ray diffraction data after the test is analyzed using a ray diffractometer under the same instrument setting conditions as in example 1, wherein the crystallinity of the 3D glass-ceramic sample 30 after hot bending is 75wt%, the precipitated crystal phase is petalite+β-quartz solid solution, and the average particle size of the crystal is 18 nm. When a light source is defined as D65, the absolute value of the b value is 0.35; the transmittance of light at a wavelength of 360nm is 88.20%, the average transmittance of light at a wavelength of 380-780nm is 92.60%, the average transmittance of light at a wavelength of 360-400nm is 90.00%, and the haze is 0.11%.

### Example 31 Preparation method of 3D glass-ceramic:

step 1 which is the same as that in Example 2;
step 2: after cooling the glass brick obtained in step 1 to 800°C, transferring same to an annealing furnace for annealing (after the annealing process is maintaining at a temperature of 600°C for 5h, reducing the temperature to 30°C by 1°C/min), and then transferring same to a precision annealing furnace for nucleation, wherein a temperature of nucleation is 800°C, and a time of nucleation is 30min;
step 3: continuing the crystallization of the nucleated glass brick in a precision annealing furnace, wherein a crystallization temperature is 870°C and a crystallization time is 15min, so as to obtain a glass brick after partial crystallization;
step 4 the process of trimming, cutting into pieces, rough grinding and polishing being the same as that in Example 1, wherein the crystallinity is determined to be 88 wt%;
step 5: subjecting the partially crystallized original glass sheet to 3D hot bending; and obtaining a 3D glass-ceramic sample 31 by using a hot bending process with the serial number 4 in table 2.

The above-mentioned 3D glass-ceramic sample 31 is tested, and the X-ray diffraction data after the test is analyzed using a ray diffractometer under the same instrument setting conditions as in example 1, wherein the crystallinity of the 3D glass-ceramic sample 31 after hot bending is 99wt%, the precipitated crystal phase is β-spodumene, and the average particle size of the crystal is 48nm. When a light source is defined as D65, the absolute value of the b value is 2.60; the transmittance of light at a wavelength of 360nm is 74.10%, the average transmittance of light at a wavelength of 380-780nm is 89.30%, the average transmittance of light at a wavelength of 360-400nm is 80.50%, and the haze is 0.78%.

### Example 32 Preparation method of 3D glass-ceramic:

step 1 which is the same as that in Example 2;
step 2: after cooling the glass brick obtained in step 1 to 800°C, transferring same to an annealing furnace for annealing (after the annealing process is maintaining at a temperature of 600°C for 5h, reducing the temperature to 30°C by 1°C/min), and then transferring same to a precision annealing furnace for nucleation, wherein a temperature of nucleation is 780°C, and a time of nucleation is 60min;
step 3: continuing the crystallization of the nucleated glass brick in a precision annealing furnace, wherein a crystallization temperature is 900°C and a crystallization time is 5min, so as to obtain a glass brick after partial crystallization;
step 4 the process of trimming, cutting into pieces, rough grinding and polishing being the same as that in Example 1, wherein the crystallinity is determined to be 58 wt%;
step 5: subjecting the partially crystallized original glass sheet to 3D hot bending; and obtaining a 3D glass-ceramic sample 32 by using a hot bending process with the serial number 7 in table 2. The above-mentioned 3D glass-ceramic sample 32 is tested, and the X-ray diffraction data after the test is analyzed using a ray diffractometer under the same instrument setting conditions as in example 1, wherein the crystallinity of the 3D glass-ceramic sample 32 after hot bending is 98wt%, the precipitated crystal phase is β-spodumene, and the average particle size of the crystal is 81nm. When a light source is defined as D65, the absolute value of the b value is 2.80; the transmittance of light at a wavelength of 360nm is 62.00%, the average transmittance of light at a wavelength of 380-780nm is 88.60%, the average transmittance of light at a wavelength of 360-400nm is 65.80%, and the haze is 0.72%.

### Example 33 Preparation method of 3D glass-ceramic:

step 1: preparing and weighing the raw materials for the preparation of glass (in mole percent, containing the following components: SiO₂ of 67.45%; Al₂O₃ of 14.20%; CaO of 0.50%; MgO of 1.79%; Na₂O of 1.56%; Li₂O of 9.70%, nucleating agent (2.18% of P₂O₅; 0.81% of TiO₂; 1.31% of ZrO₂; 0.5% of Y₂O₃), and 0.8 wt% of a fining agent NaCl in the total mass of the nucleating agent and the raw materials for preparation, the total weight of the above-mentioned raw materials being 1713.5g, and after sufficient mixing, melting and forming in a high-temperature lifting furnace, a temperature of the melting and forming being 1650°C, and a melting time being 5h, pouring same into a mould made of ASTM SA213/TP310S austenitic chromium-nickel stainless steel to obtain a glass brick;
step 2: after cooling the glass brick obtained in step 1 to 800°C, transferring same to an annealing furnace for annealing (after the annealing process is maintaining at a temperature of 500°C for 5h, reducing the temperature to 30°C by 1°C/min), and then transferring same to a precision annealing furnace for nucleation, wherein a temperature of nucleation is 650°C, and a time of nucleation is 160min;
step 3: continuing the crystallization of the nucleated glass brick in a precision annealing furnace, wherein a crystallization temperature is 820°C and a crystallization time is 30min, so as to obtain a glass brick after partial crystallization;
step 4 the process of trimming, cutting into pieces, rough grinding and polishing being the same as that in Example 1, wherein the crystallinity is determined to be 90 wt%;
step 5: subjecting the partially crystallized original glass sheet to 3D hot bending; and obtaining a 3D glass-ceramic sample 33 by using a hot bending process with the serial number 6 in table 2.

The above-mentioned 3D glass-ceramic sample 33 is tested, and the X-ray diffraction data after the test is analyzed using a ray diffractometer under the same instrument setting conditions as in example 1, wherein the crystallinity of the 3D glass-ceramic sample 33 after hot bending is 100wt%, the precipitated crystal phase is β-spodumene, and the average particle size of the crystal is 98 nm. When a light source is defined as D65, the absolute value of the b value is 3.8; the transmittance of light at a wavelength of 360nm is 63.10%, the average transmittance of light at a wavelength of 380-780nm is 88.20%, the average transmittance of light at a wavelength of 360-400nm is 65.40%, and the haze is 0.98%.

### Example 34 Preparation method of 3D glass-ceramic:

step 1: preparing and weighing the raw materials for the preparation of glass (in mole percent, containing the following components: SiO₂ of 66.65%; Al₂O₃ of 10.87%; MgO of 2.44%; ZnO of 2.82%; Na₂O of 0.21%; K₂O of 0.21%; Li₂O of 9.88%; B₂O₃ of 0.94%; nucleating agent (1.85% of P₂O₅; 2.00% of ZrO₂; 2.13% of CaF₂), and 0.7 wt% of a fining agent NaCl in the total mass of the nucleating agent and the raw materials for preparation, the total weight of the above-mentioned raw materials being 1711.9g, and after sufficient mixing, melting and forming in a high-temperature lifting furnace, a temperature of the melting and forming being 1640°C, and a melting time being 4h, pouring same into a mould made of ASTM SA213/TP310S austenitic chromium-nickel stainless steel to obtain a glass brick;
step 2: after cooling the glass brick obtained in step 1 to 800°C, transferring same to an annealing furnace for annealing (after the annealing process is maintaining at a temperature of 500°C for 5h, reducing the temperature to 30°C by 1°C/min), and then transferring same to a precision annealing furnace for nucleation, wherein a temperature of nucleation is 620°C, and a time of nucleation is 240min;
step 3: continuing the crystallization of the nucleated glass brick in a precision annealing furnace, wherein a crystallization temperature is 650°C and a crystallization time is 40min, so as to obtain a glass brick after partial crystallization;
step 4 the process of trimming, cutting into pieces, rough grinding and polishing being the same as that in Example 1, wherein the crystallinity is determined to be 68 wt%;
step 5: subjecting the partially crystallized original glass sheet to 3D hot bending; and obtaining a 3D glass-ceramic sample 34 by using a hot bending process with the serial number 7 in table 2.

The above-mentioned 3D glass-ceramic sample 34 is tested, and the X-ray diffraction data after the test is analyzed using a ray diffractometer under the same instrument setting conditions as in example 1, wherein the crystallinity of the 3D glass-ceramic sample 34 after hot bending is 79 wt%, the precipitated crystal phase is β-quartz solid solution, and the average particle size of the crystal is 65 nm. When a light source is defined as D65, the absolute value of the b value is 0.76; the transmittance of light at a wavelength of 360nm is 84.22%, the average transmittance of light at a wavelength of 380-780nm is 91.00%, the average transmittance of light at a wavelength of 360-400nm is 87.50%, and the haze is 0.16%.

### Example 35 Preparation method of 3D glass-ceramic:

step 1: preparing and weighing the raw materials for the preparation of glass (in mole percent, containing the following components: SiO₂ of 64.55%; Al₂O₃ of 10.45%; MgO of 2.37%; ZnO of 2.73%; Na₂O of 0.21%; K₂O of 0.20%; Li₂O of 9.58%; B₂O₃ of 0.91%; nucleating agent (1.94% of P₂O₅; 2.91% of TiO₂; 2.02% of ZrO₂; 2.13% of CaF₂), and 0.7 wt% of a fining agent NaCl in the total mass of the nucleating agent and the raw materials for preparation, the total weight of the above-mentioned raw materials being 1711.9g, and after sufficient mixing, melting and forming in a high-temperature lifting furnace, a temperature of the melting and forming being 1640°C, and a melting time being 4h, pouring same into a mould made of ASTM SA213/TP310S austenitic chromium-nickel stainless steel to obtain a glass brick;
step 2 and step 3 which are the same as those in Example 35;
step 4 the process of trimming, cutting into pieces, rough grinding and polishing being the same as that in Example 1, wherein the crystallinity is determined to be 82 wt%;
step 5: subjecting the partially crystallized original glass sheet to 3D hot bending; and obtaining a 3D glass-ceramic sample 35 by using a hot bending process with the serial number 6 in table 2.

The above-mentioned 3D glass-ceramic sample 35 is tested, and the X-ray diffraction data after the test is analyzed using a ray diffractometer under the same instrument setting conditions as in example 1, wherein the crystallinity of the 3D glass-ceramic sample 35 after hot bending is 86wt%, the precipitated crystal phase is β-quartz solid solution, and the average particle size of the crystal is 42 nm. After determination, when the light source is defined as D65, the absolute value of b value is 0.68; the transmittance of light at a wavelength of 360nm is 85.42%, the average transmittance of light at a wavelength of 380-780nm is 91.10%, the average transmittance of light at a wavelength of 360-400nm is 87.20%, and the haze is 0.19%.

### Example 36 Preparation method of 3D glass-ceramic:

step 1: preparing and weighing the raw materials for the preparation of glass (in mole percent, containing the following components: SiO₂ of 70.13%; Al₂O₃ of 11.50%; MgO of 2.57%; ZnO of 2.97%; Na₂O of 0.22%; K₂O of 0.22%; Li₂O of 10.40%; B₂O₃ of 0.99%; nucleating agent (0.84% of P₂O₅; 0.16% of CaF₂), and 0.7 wt% of a fining agent NaCl in the total mass of the nucleating agent and the raw materials for preparation, the total weight of the above-mentioned raw materials being 1711.9g, and after sufficient mixing, melting and forming in a high-temperature lifting furnace, a temperature of the melting and forming being 1640°C, and a melting time being 3h, pouring same into a mould made of ASTM SA213/TP310S austenitic chromium-nickel stainless steel to obtain a glass brick;
step 2 and step 3 which are the same as those in Example 34;
step 4 the process of trimming, cutting into pieces, rough grinding and polishing being the same as that in Example 1, wherein the crystallinity is determined to be 63 wt%;
step 5: subjecting the partially crystallized original glass sheet to 3D hot bending; and obtaining a 3D glass-ceramic sample 36 by using a hot bending process with the serial number 5 in table 2.

The above-mentioned 3D glass-ceramic sample 36 is tested, and the X-ray diffraction data after the test is analyzed using a ray diffractometer under the same instrument setting conditions as in example 1, wherein the crystallinity of the 3D glass-ceramic sample 36 after hot bending is 70wt%, the precipitated crystal phase is β-quartz solid solution, and the average particle size of the crystal is 37 nm. When a light source is defined as D65, the absolute value of the b value is 0.53; the transmittance of light at a wavelength of 360nm is 86.00%, the average transmittance of light at a wavelength of 380-780nm is 92.20%, the average transmittance of light at a wavelength of 360-400nm is 88.60%, and the haze is 0.10%.

### Example 37 Preparation method of 3D glass-ceramic:

step 1: same as Example 17, only except for the temperature of the melting and forming process and the melting time. the temperature of the melting and forming in this example being 1650°C, and the melting time being 2h;
step 2: after cooling the glass brick obtained in step 1 to 800°C, transferring same to an annealing furnace for annealing (after the annealing process is maintaining at a temperature of 500°C for 5h, reducing the temperature to 30°C by 1°C/min), and then transferring same to a precision annealing furnace for nucleation, wherein a temperature of nucleation is 600°C, and a time of nucleation is 80min;
step 3: continuing the crystallization of the nucleated glass brick in a precision annealing furnace, wherein a crystallization temperature is 600°C and a crystallization time is 240min, so as to obtain a glass brick after partial crystallization;
step 4 the process of trimming, cutting into pieces, rough grinding and polishing being the same as that in Example 1, wherein the crystallinity is determined to be 75 wt%;
step 5: subjecting the partially crystallized original glass sheet to 3D hot bending; and obtaining a 3D glass-ceramic sample 37 by using a hot bending process with the serial number 6 in table 2.

The above-mentioned 3D glass-ceramic sample 37 is tested, and the X-ray diffraction data after the test is analyzed using a ray diffractometer under the same instrument setting conditions as in example 1, wherein the crystallinity of the 3D glass-ceramic sample 37 after hot bending is 88wt%, the precipitated crystal phase is petalite+β-quartz solid solution, and the average particle size of the crystal is 57 nm. When a light source is defined as D65, the absolute value of the b value is 0.38; the transmittance of light at a wavelength of 360nm is 88.40%, the average transmittance of light at a wavelength of 380-780nm is 92.80%, the average transmittance of light at a wavelength of 360-400nm is 90.10%, and the haze is 0.12%.

### Example 38 Preparation method of 3D glass-ceramic:

step 1, step 2, step 3 and step 4 which are the same as in Example 22;
step 5: performing 3D hot bending on the partially crystallized original glass sheet, wherein the hot bending process uses hot bending process with the serial number of 20 in table 2, and the hot bending includes three preheating stations, four hot pressing stations and two cooling stations. A temperature of the first preheating station is 450°C, a temperature of the second preheating station is 600°C, and a temperature of the third preheating station is 650°C. A temperature of the first hot pressing station is 760°C, an upper pressure is 0.1 MPa, and a lower pressure is 0.1 MPa; a temperature of the second hot pressing station is 750°C, an upper pressure is 0.1 MPa, and a lower pressure is 0.1 MPa; a temperature of the third hot pressing station is 720°C, an upper pressure is 0.1 MPa and a lower pressure is 0.1 MPa; a temperature of the fourth hot pressing station is 600°C, an upper pressure is 0 MPa and a lower pressure is 0 MPa. A temperature of the first cooling station is 450°C and a temperature of the second cooling station is 300°C. A working time of each of the preheating station, the hot pressing station and the cooling station is the same and is 140s, and a 3D glass-ceramic sample 22F is obtained.

The above-mentioned 3D glass-ceramic sample 22F is tested, and the X-ray diffraction data after the test is analyzed using a ray diffractometer under the same instrument setting conditions as in example 1, wherein the crystallinity of the 3D glass-ceramic sample 22F after hot bending is 84wt%, the precipitated crystal phase is petalite+lithium disilicate, and the average particle size of the crystal is 18 nm. When a light source is defined as D65, the absolute value of the b value is 0.43; the transmittance of light at a wavelength of 360nm is 88.15%, the average transmittance of light at a wavelength of 380-780nm is 92.77%, the average transmittance of light at a wavelength of 360-400nm is 89.45%, and the haze is 0.11%.

### Example 39 Preparation method of 3D glass-ceramic:

step 1, step 2, step 3 and step 4 which are the same as in Example 22;
step 5: performing 3D hot bending on the partially crystallized original glass sheet, wherein the hot bending process uses hot bending process with the serial number of 21 in table 3, and the hot bending includes five preheating stations, three hot pressing stations and two cooling stations. A temperature of the first preheating station is 430°C, a temperature of the second preheating station is 500°C, a temperature of the third preheating station is 600°C, a temperature of the fourth preheating station is 680°C, and a temperature of the fifth preheating station is 720°C. A temperature of the first hot pressing station is 745°C, an upper pressure is 0.5 MPa, and a lower pressure is 0.5 MPa; a temperature of the second hot pressing station is 760°C, an upper pressure is 0 MPa, and a lower pressure is 0. MPa; a temperature of the third hot pressing station is 600°C, an upper pressure is 0 MPa and a lower pressure is 0 MPa. A temperature of the first cooling station is 450°C and a temperature of the second cooling station is 300°C. A working time of each of the preheating station, the hot pressing station and the cooling station is the same and is 140s, and a 3D glass-ceramic sample 22G is obtained.

The above-mentioned 3D glass-ceramic sample 22G is tested, and the X-ray diffraction data after the test is analyzed using a ray diffractometer under the same instrument setting conditions as in example 1, wherein the crystallinity of the 3D glass-ceramic sample 22G after hot bending is 90wt%, the precipitated crystal phase is petalite+lithium disilicate, and the average particle size of the crystal is 22 nm. When a light source is defined as D65, the absolute value of the b value is 0.55; the transmittance of light at a wavelength of 360nm is 86.12%, the average transmittance of light at a wavelength of 380-780nm is 92.40%, the average transmittance of light at a wavelength of 360-400nm is 88.40%, and the haze is 0.10%.

### Comparative examples

### Comparative Example 1 Preparation method of 3D glass-ceramic:

step 1: preparing and weighing the raw materials for the preparation of glass (in mole percent, containing the following components: SiO₂ of 62.40%; Al₂O₃ of 13.24%; MgO of 4.46%; Na₂O of 1.46%; Li₂O of 9.04%, nucleating agent (0.94% of P₂O₅; 6.58% of ZrO₂; 1.88% of TiO₂, totaling the nucleating agent of 9.40%), and 0.8 wt% of NaCl in the total mass of the nucleating agent and the raw materials for preparation, the total weight of the above-mentioned raw materials being 1713.6g, and after sufficient mixing, melting and forming in a high-temperature lifting furnace, a temperature of the melting and forming being 1630°C, and a melting time being 5h, pouring same into a mould made of ASTM SA213/TP310S austenitic chromium-nickel stainless steel to obtain a glass brick;
step 2, which is the same as Example 4, wherein it can be seen that the nucleated original glass sheet has precipitated crystals and is in a ceramic state, which does not meet the conditions for the subsequent hot-bending process.

### Comparative Example 2 Preparation method of 3D glass-ceramic:

step 1: preparing and weighing the raw materials for the preparation of glass (in mole percent, containing the following components: SiO₂ of 60.70%; Al₂O₃ of 12.87%; MgO of 4.34%; Na₂O of 1.42%; Li₂O of 8.79%, nucleating agent (0.91% of P₂O₅; 9.14% of ZrO₂; 1.83% of TiO₂, totaling the nucleating agent of 11.88%), and 0.8 wt% of NaCl in the total mass of the nucleating agent and the raw materials for preparation, the total weight of the above-mentioned raw materials being 1713.6g, and after sufficient mixing, melting and forming in a high-temperature lifting furnace, a temperature of the melting and forming being 1630°C, and a melting time being 5h, pouring same into a mould made of ASTM SA213/TP310S austenitic chromium-nickel stainless steel to obtain a glass brick;
step 2: during the process of cooling the glass brick obtained in step 1 to 800°C, crystals being precipitated in a central part, and a stress difference appearing in an interior of the glass brick, which causes the glass brick to be broken and cannot be machined.

### Comparative Example 3 Preparation method of 3D glass-ceramic:

step 1: preparing and weighing the raw materials for the preparation of glass (in mole percent, containing the following components: SiO₂ of 67.45%; Al₂O₃ of 14.20%; CaO of 0.50%; MgO of 1.79%; Na₂O of 1.56%; Li₂O of 9.70%, nucleating agent (2.18% of P₂O₅; 1.31% of ZrO₂; 0.81% of TiO₂, and 0.5% of Y₂O₃), and 0.8 wt% of a fining agent NaCl in the total mass of the nucleating agent and the raw materials for preparation, the total weight of the above-mentioned raw materials being 1708.5g, and after sufficient mixing, melting and forming in a high-temperature lifting furnace, a temperature of the melting and forming being 1630°C, and a melting time being 5h, pouring same into a mould made of ASTM SA213/TP310S austenitic chromium-nickel stainless steel to obtain a glass brick;
step 2 which is the same as that in Example 4;
step 3: continuing the crystallization of the nucleated glass brick in a precision annealing furnace, wherein a crystallization temperature is 930°C and a crystallization time is 30 min; after the crystallization , the glass brick showing uncontrollable devitrification due to the over-high crystallization temperature, wherein the stress difference in the glass brick causes the glass brick to fracture and the glass brick can not be machined.

### Comparative Example 4 Preparation method of 3D glass-ceramic:

step 1: preparing and weighing the raw materials for the preparation of glass (in mole percent, containing the following components: SiO₂ of 70.33%; Al₂O₃ of 14.82%; Na₂O of 1.63%; Li₂O of 10.11%; MgO of 1.34%; ZnO of 1.04%, nucleating agent (0.52% of P₂O₅; 0.21% of ZrO₂), and 0.4wt% of NaCl and 0.4wt% of SnO₂ in the total mass of the nucleating agent and the raw materials for preparation as a fining agent, the total weight of the above-mentioned raw materials being 1708.5g, and after sufficient mixing, melting and forming in a high-temperature lifting furnace, a temperature of the melting and forming being 1630°C, and a melting time being 5h, pouring same into a mould made of ASTM SA213/TP310S austenitic chromium-nickel stainless steel to obtain a glass brick;
steps 2 and 3 which are the same as the conditions of example 33, performing an XRD test on the nucleated glass brick, wherein it can be seen that crystal nucleus cannot occur due to too little nucleating agent, uncontrollable devitrification occurs during the crystallization, and a stress difference occurs inside the glass, resulting in breakage of the hot-bent glass.

### Comparative Example 5 Preparation method of 3D glass-ceramic:

step 1: preparing and weighing the raw materials for the preparation of glass (in mole percent, containing the following components: SiO₂ of 70.45%; Al₂O₃ of 13.16%; MgO of 2.78%; Na₂O of 0.56%; Li₂O of 7.98%; B₂O₃ of 1.00%; nucleating agent (1.67% of P₂O₅; 1.30% of ZrO₂; 0.60% of TiO₂, and 0.5% of Y₂O₃), and 0.4 wt% of NaCl and 0.3 wt% of CeO₂ in the total mass of the nucleating agent and the raw materials for preparation as a fining agent, the total weight of the above-mentioned raw materials being 1711.9g, and after sufficient mixing, melting and forming in a high-temperature lifting furnace, a temperature of the melting and forming being 1630°C, and a melting time being 5h, pouring same into a mould made of ASTM SA213/TP310S austenitic chromium-nickel stainless steel to obtain a glass brick;
step 2: cooling the glass brick obtained in step 1 to 900°C, and then transferring same to a precision annealing furnace for a nucleation; a temperature of nucleation being 850°C, and a time of nucleation being120 min; after the nucleation, wherein the glass brick shows uncontrollable devitrification due to the high temperature of nucleation, and the stress difference in the glass brick causes the glass brick to be broken, so the subsequent processes cannot be carried out.

### Comparative Example 6 Preparation method of 3D glass-ceramic:

step 1, step 2, step 3 and step 4 which are the same as in Example 22;
step 5: performing 3D hot bending on the partially crystallized original glass sheet, wherein the hot bending process uses hot bending process with the serial number of 16 in table 2, and the hot bending includes four preheating stations, three hot pressing stations and two cooling stations. A temperature of the first preheating station is 480°C, a temperature of the second preheating station is 600°C, a temperature of the third preheating station is 650°C, and a temperature of the fourth preheating station is 720°C. A temperature of the first hot pressing station is 940°C, an upper pressure is 0.1 MPa, and a lower pressure is 0.1 MPa; a temperature of the second hot pressing station is 920°C, an upper pressure is 0.1 MPa, and a lower pressure is 0. 1 MPa; a temperature of the third hot pressing station is 600°C, an upper pressure is 0 MPa and a lower pressure is 0 MPa. A temperature of the first cooling station is 450°C and a temperature of the second cooling station is 300°C. A working time of each of the preheating station, the hot pressing station and the cooling station is the same and is 90s. A 3D glass-ceramic sample 22B is obtained.

The above-mentioned 3D glass-ceramic sample 22B is tested, and the X-ray diffraction data after the test is analyzed using a ray diffractometer under the same instrument setting conditions as in example 1, wherein the crystallinity of the 3D glass-ceramic sample 22B after hot bending is 100wt%, the precipitated crystal phase is β-spodumene+lithium disilicate, and the average particle size of the crystal is 111 nm. When a light source is defined as D65, the absolute value of the b value is 7.45; the transmittance of light at a wavelength of 360nm is 64.10%, the average transmittance of light at a wavelength of 380-780nm is 86.50%, the average transmittance of light at a wavelength of 360-400nm is 69.20%, and the haze is 0.99%. As the hot-pressing temperature is too high, the final prepared glass-ceramics have a high average crystal size, resulting in an increase in b value, a decrease in light transmittance, and a too high b value, and the glass-ceramics are bluish, affecting imaging.

### Comparative Example 7 Preparation method of 3D glass-ceramic:

step 1, step 2, step 3 and step 4 which are the same as in Example 22;
step 5: performing 3D hot bending on the partially crystallized original glass sheet, wherein the hot bending process uses hot bending process with the serial number of 17 in table 2, and the hot bending includes four preheating stations, three hot pressing stations and two cooling stations. A temperature of the first preheating station is 450°C, a temperature of the second preheating station is 600°C, a temperature of the third preheating station is 650°C, and a temperature of the fourth preheating station is 720°C. A temperature of the first hot pressing station is 930°C, an upper pressure is 0.1 MPa, and a lower pressure is 0.1 MPa; a temperature of the second hot pressing station is 920°C, an upper pressure is 0.1 MPa, and a lower pressure is 0. 1 MPa; a temperature of the third hot pressing station is 600°C, an upper pressure is 0 MPa and a lower pressure is 0 MPa. A temperature of the first cooling station is 450°C and a temperature of the second cooling station is 300°C. A working time of each of the preheating station, the hot pressing station and the cooling station is the same and is 90s. A 3D glass-ceramic sample 22C is obtained.

The above-mentioned 3D glass-ceramic sample 22C is tested, and the X-ray diffraction data after the test is analyzed using a ray diffractometer under the same instrument setting conditions as in example 1, wherein the crystallinity of the 3D glass-ceramic sample 22C after hot bending is 100wt%, the precipitated crystal phase is β-spodumene+lithium disilicate, and the average particle size of the crystal is 124 nm. When a light source is defined as D65, the absolute value of the b value is 7.86; the transmittance of light at a wavelength of 360nm is 62.40%, the average transmittance of light at a wavelength of 380-780nm is 87.30%, the average transmittance of light at a wavelength of 360-400nm is 68.20%, and the haze is 1.10%. As the hot-pressing temperature is too high, the final prepared glass-ceramics have a high average crystal size, resulting in an increase in b value, a decrease in light transmittance, and a too high b value, and the glass-ceramics are bluish, affecting imaging.

### Comparative Example 8 Preparation method of 3D glass-ceramic:

step 1, step 2, step 3 and step 4 which are the same as in Example 22;
step 5: performing 3D hot bending on the partially crystallized original glass sheet, wherein the hot bending process uses hot bending process with the serial number of 18 in table 2, and the hot bending includes four preheating stations, three hot pressing stations and two cooling stations. A temperature of the first preheating station is 450°C, a temperature of the second preheating station is 500°C, a temperature of the third preheating station is 650°C, and a temperature of the fourth preheating station is 650°C. A temperature of the first hot pressing station is 580°C, an upper pressure is 0.1 MPa, and a lower pressure is 0.1 MPa; a temperature of the second hot pressing station is 600°C, an upper pressure is 0.1 MPa, and a lower pressure is 0. 1 MPa; a temperature of the third hot pressing station is 600°C, an upper pressure is 0 MPa and a lower pressure is 0 MPa. A temperature of the first cooling station is 450°C and a temperature of the second cooling station is 300°C. A working time of each of the preheating station, the hot pressing station and the cooling station is the same and is 90s. A 3D glass-ceramic sample 22D is obtained. Due to the low hot-pressing temperature, the 3D glass-ceramic sample 22D cannot be hot-bent into the target shape.

### Comparative Example 9 Preparation method of 3D glass-ceramic:

step 1, step 2, step 3 and step 4 which are the same as in Example 22;
step 5: performing 3D hot bending on the partially crystallized original glass sheet, wherein the hot bending process uses hot bending process with the serial number of 19 in table 2, and the hot bending includes three preheating stations, three hot pressing stations and two cooling stations. A temperature of the first preheating station is 500°C, a temperature of the second preheating station is 550°C, and a temperature of the third preheating station is 600°C. A temperature of the first hot pressing station is 600°C, an upper pressure is 0.1 MPa, and a lower pressure is 0.1 MPa; a temperature of the second hot pressing station is 580°C, an upper pressure is 0.1 MPa, and a lower pressure is 0. 1 MPa; a temperature of the third hot pressing station is 550°C, an upper pressure is 0 MPa and a lower pressure is 0 MPa. A temperature of the first cooling station is 450°C and a temperature of the second cooling station is 300°C. A working time of each of the preheating station, the hot pressing station and the cooling station is the same and is 90s, and a 3D glass-ceramic sample 22E is obtained. Due to the low hot-pressing temperature, the 3D glass-ceramic sample 22E cannot be hot-bent into the target shape.

### Application examples

Mechanical parameters are measured for the 3D glass-ceramics obtained after chemical strengthening according to Examples 1, 2, 4, 7, 12, 16, 22, 23, 24 and 25, and the glass thickness is measured to be 0.65, and the results are shown in Table 3.

A SLP-2000 stress gauge is used to perform a test that is conventional, which is set to a photoelastic coefficient of 25.5 and a refractive index of 1.54, and the test results include a surface compressive stress, a compressive stress depth and an average tensile stress, wherein a linear density of the tensile stress is a calculated value, and a sum of the tensile stresses obtained by the SLP-2000 stress meter is divided by the glass thickness.

Surface compressive stress (MPa): after the glass is chemically strengthened, the alkali metal ions with a smaller radius on the surface are replaced by alkali metal ions with a larger radius, and due to the plug effect of alkali metal ions with a larger radius, the glass surface thus generates compressive stress, which is called surface compressive stress;

Compressive stress depth (µm): the distance from the surface of the chemically strengthened glass to the position where the compressive stress is zero;

Average tensile stress CT-AV (MPa): a ratio of a sum of the tensile stresses obtained according to the test by SLP-2000 stress gauge to a thickness of the zone of the tensile stress;

Linear density of the tensile stress CT-LD: a ratio of a tensile stress integral to the glass thickness of the chemically strengthened glass at its thickness section obtained according to the test by the SLP-2000 stress gauge;

Whole machine drop test: a method for testing the intensity of strengthened glass, wherein the strengthened glass sheet is attached with electronic equipment samples such as mobile phones, falls down from a free fall at a height, and the height at which the glass is broken is recorded, and this height value can reflect the strength of the glass, and this test method is referred to as whole machine drop test. The test method of this patent is as follows: a mobile phone loaded of 180g being attached with a strengthened glass sheet and freely dropped on a marble floor closely adhered with 120 mesh sandpaper for the glass sheet and the sandpaper to contact with each other; Vickers hardness (Hv) (pressure of 300N for 10s): a diamond regular pyramid indenter with an included angle of 136 degrees between opposite faces being used to press a surface of the test sample under the action of a load of 300N, the load being removed after reservation for 10s, a diagonal length d of the indentation being measured, and then a surface area of the indentation being calculated, and finally an average pressure on the surface area of the indentation being calculated, namely, the Vickers hardness value of the glass, which is represented by the symbol HV

**Table 3 Determination of mechanical parameters**

| Items | | Examp le 1 | Exam ple 2 | Exam ple 4 | Exam ple 7 | Examp le 12 | Examp le 16 | Exam ple 22 | Examp le 23 | Examp le 24 | Exam ple 25 |
|---|---|---|---|---|---|---|---|---|---|---|---|
| Fini she d pro due ts of 3D glas s-ce ram ics afte r che | Surface compre ssive stress (MPa) | 423 | 430 | 387 | 498 | 514 | 356 | 108 | 114 | 120 | 145 |
| | Compr essive stress depth (µm) | 114 | 121 | 109 | 113 | 120 | 109 | 105 | 107 | 111 | 114 |
| | Averag e tensile stress CT-AV | 84 | 87 | 72 | 92 | 93 | 63 | 42 | 44 | 47 | 48 |
| mic al stre ngt hen ing Stre ss test data | (MPa) | | | | | | | | | | |
| | Linear density of tensile stress CT-LD | 38214 | 43157 | 36541 | 42130 | 41035 | 34035 | 30145 | 31247 | 32641 | 3218 9 |
| Whole machine drop height (m) of finished 3D glass-ceramics loaded with 180g (wherein the floor medium is marble) | | 1.51 | 1.63 | 1.58 | 1.65 | 1.60 | 1.70 | 1.82 | 1.80 | 1.75 | 1.81 |
| Vickers hardness (Hv) after nucleation (the pressure being kept at 300N for 10s) | | 658 | 661 | 649 | 631 | 625 | 612 | 536 | 530 | 527 | 533 |
| Vickers hardness (Hv) after partial crystallization (the pressure being kept at 300N for 10s) | | 694 | 682 | 691 | 687 | 679 | 677 | 657 | 652 | 664 | 682 |
| Vickers hardness (Hv) of 3D glass-ceramic samples after 3D hot bending (the pressure being kept at 300N | | 718 | 714 | 719 | 702 | 698 | 712 | 713 | 708 | 705 | 725 |
| for 10s) | | | | | | | | | | | |
| Vickers hardness (Hv) of 3D glass-ceramic finished products after chemical strengthening (the pressure being kept at 300N for 10s) | 721 | 725 | 731 | 730 | 712 | 735 | 741 | 734 | 729 | 729 | |

As can be seen from the table, the finished products of 3D glass-ceramic after chemical strengthening in the examples have a surface compressive stress of 108-514MPa, a compressive stress depth of 109-121 µm, an average tensile stress CT-AV of 42-93MPa, a linear density of tensilestress CT-LD of 30145-43157, a whole machine drop test height of 1.51-1.82m, and a Vickers hardness (maintained at a pressure of 300N for 10s) of 712-741 Hv.

What has been described above is merely a preferred examples of the disclosure and is not intended to limit the disclosure in any way. Thus, it is intended that the scope of protection of the present disclosure cover the modifications, equivalents, and improvements falling within the spirit and principle of the disclosure.

## Claims

1. A 3D glass-ceramic **characterized in that** the 3D glass-ceramic has a crystallinity of 14-100wt%; crystals of the 3D glass-ceramic have an average particle size of 10-100nm.

2. The 3D glass-ceramic according to claim 1, wherein the 3D glass-ceramic has a crystallinity of 14-30wt%, or the 3D glass-ceramic has a crystallinity of 50-100wt%; or the 3D glass-ceramic has a crystallinity of 31-49wt%;
or the crystals of the 3D glass-ceramic have an average particle size of 15-30 nm;
or the 3D glass-ceramic has a thickness of 0.02-5mm, preferably the 3D glass-ceramic has a thickness of 0.35-1.2mm.

3. The 3D glass-ceramic according to claim 1 or 2, wherein the 3D glass-ceramic has an average transmittance of 88-93%, preferably 90-91.5% at a wavelength of light of 380-780nm;
or the 3D glass-ceramic has an average transmittance of 65-91.5%, preferably 79-91%, more preferably 85-91% at a wavelength of light of 360-400 nm.

4. The 3D glass-ceramic according to any one of claims 1-3, wherein an absolute value of b value (yellow-blue value) when a thickness of the 3D glass-ceramic is 0.7 mm is 0.1-3.5, preferably 0.3-1.5;
or the 3D glass-ceramic has a haze of 0.07-1.0%, preferably 0.07-0.5%.

5. The 3D glass-ceramic according to any one of claims 1-4, wherein a crystalline phase of the 3D glass-ceramic is one or two or more of lithium silicate, lithium disilicate, β-quartz, β-quartz solid solution, petalite, β-spodumene, β-spodumene solid solution, nepheline, cordierite, mullite, apatite, zirconium dioxide, zinc spinel, magnesium aluminate spinel and rutile.

6. The 3D glass-ceramic according to any one of claims 1-5, wherein the 3D glass-ceramic includes the following ratio of oxides in mol%:
| composition | mol% |
|---|---|
| SiO₂ | 55%∼74% |
| Al₂O₃ | 3%∼19% |
| B₂O₃ | 0%∼4% |
| MgO | 0%∼6% |
| Na₂O | 0%∼3% |
| Li₂O | 6%∼25% |
| K₂O | 0%∼1% |
| CaO | 0-2% |
| ZnO | 0-5% |
| rare earth oxide | 0-3% |
the rare earth oxide being selected from one or two or more of La₂O₃, Eu₂O₃, Pr₆O₁₁, Nd₂O₃, Er₂O₃ and Dy₂O₃.

7. The 3D glass-ceramic according to claim 6, wherein the 3D glass-ceramic includes SiO₂ and Al₂O₃ in a total amount of more than 60% in mol%; preferably 68-80%;
or Na₂O+Li₂O is present in a range of 7%-30%, preferably 10%-26%, in mol%.

8. The 3D glass-ceramic according to any one of claims 1-7, wherein the 3D glass-ceramic includes a nucleating agent comprising one or two or more of P₂O₅, TiO₂, ZrO₂, Cr₂O₃, CaF₂, LiF, NaF, KF, Y₂O₃, Au, Ag and Cu in terms of oxides, fluorides or elements; preferred are one or two or more of P₂O₅, TiO₂ and ZrO₂.

9. The 3D glass-ceramic according to any one of claims 1-8, wherein the 3D glass-ceramic includes a fining agent comprising one or two or more of NaCl, Na₂SO₄, SnO₂, As₂O₃, Sb₂O₃, NaNO₃, KNO₃, CeO₂ and (NH₄)₂SO₄; preferred are one or two or more of NaCl, SnO₂, NaNO₃ and CeO₂.

10. The 3D glass-ceramic according to any one of claims 1-9, wherein the crystallized glass raw material of the 3D glass-ceramic is a glass material having crystals with an average particle size of 5-50 nm after being subjected to nucleation and crystallization.

11. The 3D glass-ceramic according to any one of claims 1-9, wherein the crystallized glass raw material of the 3D glass-ceramic is a glass material having a crystallinity of 5-90wt% after being subjected to nucleation and crystallization.

12. The 3D glass-ceramic according to any one of claims 1-11, wherein the 3D glass-ceramic has a drop height of >1.5m after chemical strengthening, and preferably a Vickers hardness at a load of 300N for 10s is greater than 650.

13. A preparation method of the 3D glass-ceramic according to any one of claims 1-12, wherein the preparation method includes the steps of:
step 1: mixing and melting raw materials for preparing the 3D glass-ceramic, and then cooling and
performing an annealing processing to obtain a glass substrate;
step 2: subjecting the glass substrate obtained in step 1 to nucleation, a cleavage being able to be performed as required before or after the nucleation;
step 3: performing crystallization on the nucleated glass substrate of the step 2;
step 4: cutting the crystallized glass substrate as required to obtain a crystallized glass raw material;
step 5: subjecting the crystallized glass raw material to 3D hot bending to obtain a 3D glass-ceramic sample,
the 3D hot-bending process in step 5 being accompanied with crystallization process.

14. The method according to claim 13, wherein in the step 1, a melting temperature is 1350-1700°C; preferably, the melting temperature is 1400-1650°C; more preferably, a melt is cooled to 500-1000°C after melting; furthermore, the method may further include the step of subjecting the 3D glass-ceramic sample to chemical strengthening to obtain a finished 3D glass-ceramic product.

15. The method according to claim 13 or 14, wherein in the step 1, a melting time is 1-5 hours; preferably, in the step 3, the crystallization is performed after the temperature is maintained at 500-900°C for 5-300min; it is further preferred that the step 3 further includes one or two or more of trimming, CNC machining, rough grinding and/or polishing to obtain a crystallized glass raw material.

16. The method according to any one of claims 13-15, wherein the nucleating agent is added in step 1 in an amount of 1-9 mol%, more preferably an amount of 2-5 mol%, of a total amount of the nucleating agent and glass-ceramic oxide.

17. The method according to any one of claims 13-16, wherein the fining agent is added in step 1 in an amount of 0-4wt%, preferably 0.1-2wt% of a total mass of the nucleating agent and the glass-ceramic oxide.

18. The method according to any one of claims 13-17, wherein in the step 2, the nucleation is performed at a temperature of 450-800°C, and the nucleation is performed for a time of 30-360 min; further preferably, the nucleation is performed at a temperature of 520-570°C, and the nucleation is performed for a time of 120-300 min.

19. The method according to any one of claims 13-18, wherein in the step 3, the crystallization is performed at a temperature of 550-900°C, and the crystallization is performed for a time of 5-300 min,
preferably, the crystallization is performed at a temperature of 600-850°C, and the crystallization is performed for a time of 10-240 min.
further preferably, the crystallization is performed at a temperature of 600-750°C, and the crystallization is performed for a time of 10-150 min.

20. The method according to any one of claims 13-19, wherein the hot bending of step 5 includes a preheating station, a hot pressing station, and a cooling station.

21. The method according to claim 20, wherein a number of the preheating stations is 1-30, preferably 2-4; a number of the hot pressing stations is 1-30, preferably 1-3; the cooling station(s) include(s) 1-30, preferably 2-4 stations.

22. The method according to claim 20 or 21, wherein a temperature of the preheating station is 300-850°C; a temperature of the hot pressing station is 600-920°C, and a pressure thereof is 0-6 MPa; a temperature of the cooling station is 200-650°C.

23. The method according to any of claims 20-22, wherein a working time of the preheating station is 20-800 seconds; a working time of the hot pressing station is 20-800 seconds, and a working time of the cooling station is 20-800 seconds;
preferably, a working time of the preheating station is 60-600 seconds; a working time of the hot pressing station is 60-480 seconds, and a working time of the cooling station is 60-600 seconds.

24. A 3D glass-ceramic prepared by the preparation method according to any one of claims 13-23.

25. The 3D glass-ceramic according to claim 24, **characterized in that** the 3D glass-ceramic is transparent or opaque; preferably, the 3D glass-ceramic is curved or planar.

26. Application of the 3D glass-ceramic according to any one of claims 1-12 or the 3D glass-ceramic according to claim 24 or 25 in a mobile phone display screen, a tablet computer display screen, a palm game, an electronic terminal, a portable digital device, a vehicle-mounted central control screen, an electronic whiteboard glass, a smart home touch screen, a vehicle windshield glass, an aerocraft windshield glass or an aircraft windshield glass.
